# EUROPEAN PATENT APPLICATION

(11) **EP 4 675 762 A1**
(43) Date of publication of application: **07.01.2026**
(21) Application number: 25176956.8
(22) Date of filing: 16.05.2025
(51) Int. Cl.: H01M 10/613, H01M 10/625, H01M 10/6552, H01M 50/293, H01M 10/6556, H01M 10/6567, H01M 50/204, H01M 50/262, H01M 50/291

(54) **POWER STORAGE DEVICE**

(30) Priority: 04.07.2024 JP 2024108125
(71) Applicant: TOYOTA JIDOSHA KABUSHIKI KAISHA, Toyota-shi, Aichi-ken 471-8571 (JP)
(72) Inventor: GOITSUKA, Shinya, Toyota-shi, 471-8571 (JP)
(74) Representative: TBK

(57) **Abstract**

A power storage device (100) comprises a first power storage module (7), a second power storage module (12) spaced apart from the first power storage module (7), a cooling pipe (420) passing between the first power storage module (7) and the second power storage module (12), and a resin member (53) that is disposed between the first power storage module (7) and the second power storage module (12) and that covers the cooling pipe (420) between the first power storage module (7) and the second power storage module (12).

## Description

### CROSS REFERENCE TO RELATED APPLICATIONS

This nonprovisional application is based on Japanese Patent Application No. 2024-108125 filed on July 4, 2024, with the Japan Patent Office, the entire contents of which are hereby incorporated by reference.

### BACKGROUND

### Field

The present disclosure relates to a power storage device.

### Description of the Background Art

For example, Japanese National Patent Publication No. 2024-508504 discloses a battery pack (a power storage device) comprising a heat sink (a cooling plate) as well as a pack refrigerant tube (a cooling pipe) connected to the heat sink for a refrigerant to flow through.

### SUMMARY

The surface of a cooling pipe is cold, and therefore, in a power storage device equipped with a cooling pipe, condensation water can adhere to the surface of the cooling pipe. The condensation water can cause a short circuit between adjacent power storage modules, so there is a demand for suppressing adhesion of condensation water to the surface of a cooling pipe.

An object of the present disclosure is to suppress adhesion of condensation water to the surface of a cooling pipe in a power storage device.
(1) A power storage device according to an aspect of the present disclosure comprises a first power storage module, a second power storage module spaced apart from the first power storage module, a cooling pipe passing between the first power storage module and the second power storage module, and a resin member that is disposed between the first power storage module and the second power storage module and that covers the cooling pipe between the first power storage module and the second power storage module.
(2) In the power storage device according to (1) above, an upper end of the resin member is positioned above an upper end of the first power storage module and also above an upper end of the second power storage module.
(3) The power storage device according to (1) above further comprises an accommodation case that accommodates the first power storage module and the second power storage module. The accommodation case includes an upper case and a lower case. The resin member has a case support portion that protrudes upward and that supports the upper case.
(4) The power storage device according to (1) above further comprises an accommodation case that accommodates the first power storage module and the second power storage module. The accommodation case includes an upper case and a lower case. The power storage device further comprises a cooling plate connected to the cooling pipe and disposed below the first power storage module and also below the second power storage module, a third power storage module disposed below the first power storage module, a fourth power storage module disposed below the second power storage module, and a reinforcement member provided to the lower case and formed to protrude upward from the lower case. The reinforcement member is disposed between the third power storage module and the fourth power storage module. The cooling plate is disposed between the first power storage module and the third power storage module and also between the second power storage module and the fourth power storage module. The cooling plate is disposed above the reinforcement member. The resin member includes a resin main body disposed above the cooling plate, as well as a fixation portion protruding downward from the resin main body and fixed to the reinforcement member.
(5) The power storage device according to (4) above further comprises a filling material disposed between the cooling plate and the resin main body.
(6) In the power storage device according to (1) above, the resin member includes an upper resin member, and a lower resin member disposed below the upper resin member. The cooling pipe is sandwiched between the upper resin member and the lower resin member.
(7) The power storage device according to (6) above further comprises an accommodation case that accommodates the first power storage module and the second power storage module. The accommodation case includes an upper case and a lower case. The upper resin member has a case support portion that protrudes upward and that supports the upper case.
(8) The power storage device according to (7) above further comprises an electrical apparatus disposed inside the accommodation case, as well as a wire harness connected to the electrical apparatus and disposed between the first power storage module and the second power storage module. The case support portion has a wiring support portion that supports the wire harness.
(9) The power storage device according to (6) above further comprises an accommodation case that accommodates the first power storage module and the second power storage module. The accommodation case includes an upper case and a lower case. The power storage device further comprises a cooling plate connected to the cooling pipe and disposed below the first power storage module and also below the second power storage module, a third power storage module disposed below the first power storage module, a fourth power storage module disposed below the second power storage module, and a reinforcement member provided to the lower case and formed to protrude upward from the lower case. The reinforcement member is disposed between the third power storage module and the fourth power storage module. The cooling plate is disposed between the first power storage module and the third power storage module and also between the second power storage module and the fourth power storage module. The cooling plate is disposed above the reinforcement member. The lower resin member has a fixation portion protruding downward and fixed to the reinforcement member.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 is a side view schematically illustrating a vehicle comprising a power storage device according to an embodiment of the present disclosure.
Fig. 2 is an exploded perspective view of a power storage device 100 illustrated in Fig. 1.
Fig. 3 is a view of a lower case 92, viewed from above the power storage device 100.
Fig. 4 is a view of the interior of power storage device 100 from which an upper case 91 is removed, viewed from above the power storage device 100.
Fig. 5 is a view of the interior of power storage device 100 from which coolers 31 to 33 and components positioned above the coolers 31 to 33 are removed, viewed from above the power storage device 100.
Fig. 6 is a view illustrating electrical connection of a power storage unit 110.
Fig. 7 is a view of the interior of power storage device 100 from which upper case 91, a wire harness 70, a bus bar 20, and a resin member 50 are removed, viewed from above the power storage device 100.
Fig. 8 is a view of cooling pipes 41, 42 and coolers 31 to 33.
Fig. 9 is a perspective view of a resin member adopted as each of resin members 53 to 56 illustrated in Fig. 2 and Fig. 4.
Fig. 10 is a cross-sectional view at the line X-X drawn in Fig. 4.
Fig. 11 is a cross-sectional view at the line XI-XI drawn in Fig. 4.
Fig. 12 is a cross-sectional view at the line XII-XII drawn in Fig. 4.
Fig. 13 is a cross-sectional view at the line XIII-XIII drawn in Fig. 4.
Fig. 14 is a perspective view of a resin member adopted as each of resin members 51, 52 illustrated in Fig. 2 and Fig. 4.
Fig. 15 is a cross-sectional view at the line XV-XV drawn in Fig. 4.
Fig. 16 is a cross-sectional view at the line XVI-XVI drawn in Fig. 4.
Fig. 17 is a view of a resin member according to Variation 1.
Fig. 18 is a view of a resin member according to Variation 2.
Fig. 19 is a view of a resin member according to Variation 3.
Fig. 20 is a view of a resin member according to Variation 4.

### DESCRIPTION OF THE PREFERRED EMBODIMENTS

In the following, a description will be given of embodiments and variations of the present disclosure, with reference to drawings. In the following description, the same parts and components are denoted by the same reference characters. Their names and functions are also the same. Therefore, detailed description thereof will not be repeated. It should be noted that some of the embodiments and variations described below may be selected and combined as appropriate.

### [Embodiments]

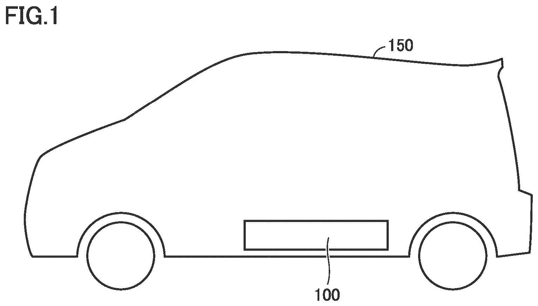

Referring to Fig. 1 to Fig. 16, a power storage device according to an embodiment of the present disclosure will be described.

Fig. 1 is a side view schematically illustrating a vehicle comprising a power storage device according to an embodiment of the present disclosure. A power storage device 100 according to an embodiment of the present disclosure is a power storage device to be mounted on a vehicle 150, for storing electric power for travelling. Vehicle 150 travels on electric power stored in power storage device 100. Examples of vehicle 150 include hybrid electric vehicles, plug-in hybrid electric vehicles, fuel cell electric vehicles, and battery electric vehicles. Power storage device 100 is disposed below a floor panel of vehicle 150.

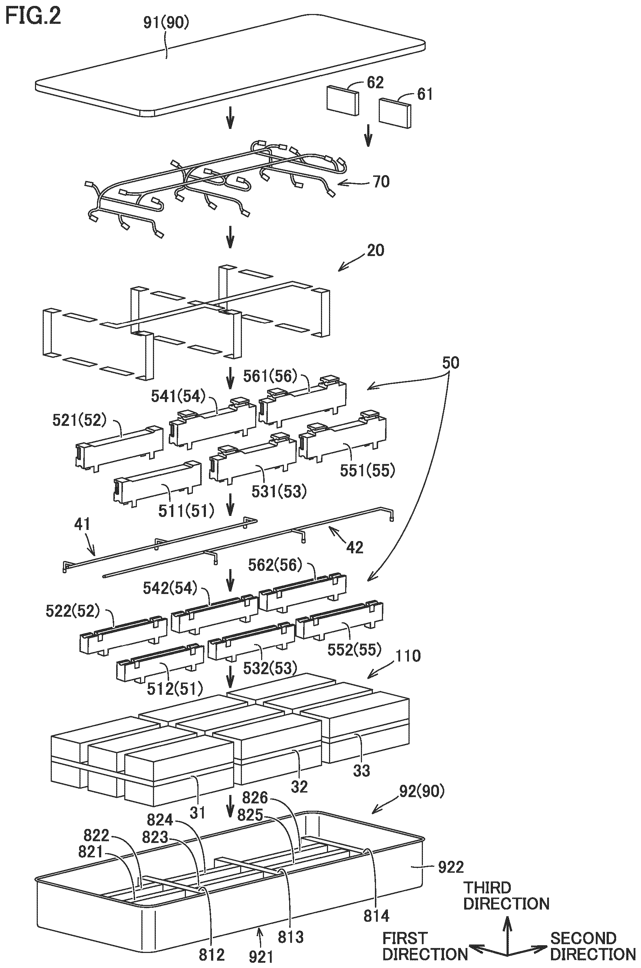

Fig. 2 is an exploded perspective view of power storage device 100 illustrated in Fig. 1. Power storage device 100 according to the present embodiment is a battery pack, for example. Power storage device 100 comprises a power storage unit 110, a bus bar 20, coolers 31 to 33, cooling pipes 41, 42, a resin member 50, satellite battery monitors (SBMs) 61, 62, a wire harness 70, and an accommodation case 90.

Accommodation case 90 accommodates power storage unit 110, bus bar 20, coolers 31 to 33, cooling pipes 41, 42, resin member 50, SBMs 61, 62, and wire harness 70. More specifically, accommodation case 90 includes an upper case 91 and a lower case 92. In the space formed by upper case 91 and lower case 92, power storage unit 110, bus bar 20, coolers 31 to 33, cooling pipes 41, 42, resin member 50, SBMs 61, 62, and wire harness 70 are accommodated. Lower case 92 is provided with a reinforcement member.

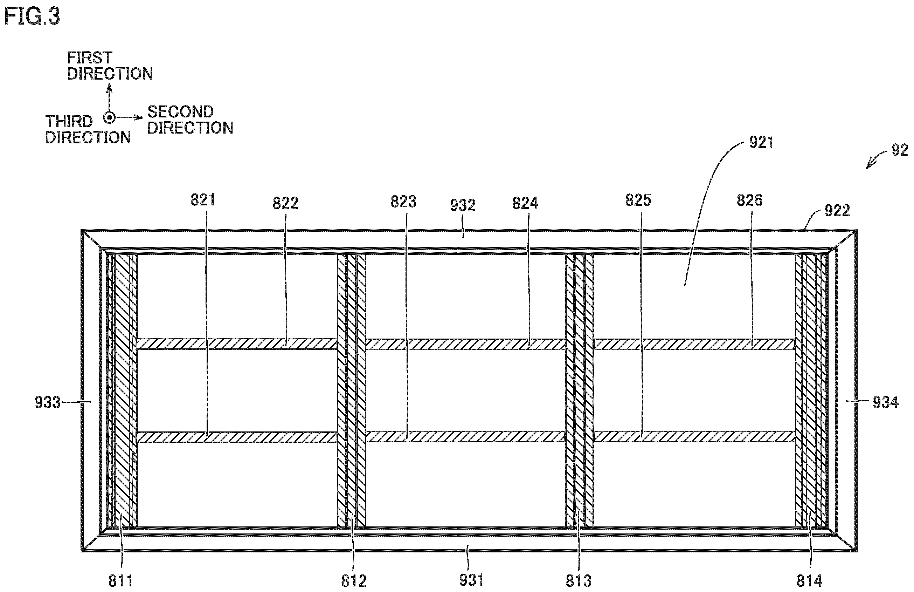

Referring to Fig. 2 and Fig. 3, lower case 92 and the reinforcement member provided to lower case 92 will be described. Fig. 3 is a view of lower case 92, viewed from above the power storage device 100. Lower case 92 includes a bottom wall 921 and a peripheral wall 922. Peripheral wall 922 rises from the peripheral edge portion of bottom wall 921. Peripheral wall 922 is formed in the shape of a substantially rectangular tube. Peripheral wall 922 includes side walls 931 to 934. Side wall 931 and side wall 932 are spaced apart from each other in a first direction. Side wall 933 and side wall 934 are spaced apart from each other in a second direction.

The second direction is a direction orthogonal to the first direction and along a bottom surface (more specifically, bottom wall 921) of power storage device 100. A third direction is a height direction of power storage device 100. More specifically, the third direction is a direction going from bottom wall 921 toward upper case 91 (see Fig. 2). The third direction is a direction orthogonal to bottom wall 921. In the present disclosure, the term "above" or "upward" refers to the same direction as the third direction, and the term "below" or "downward" refers to a direction opposite to the third direction.

Power storage device 100 further comprises reinforcement members 811 to 814, 821 to 826. Reinforcement members 811 to 814, 821 to 826 are provided to lower case 92. Each of reinforcement members 811 to 814, 821 to 826 is formed to protrude upward from bottom wall 921 of lower case 92. Each of reinforcement members 811 to 814, 821 to 826 is fixed (for example, fastened) to bottom wall 921. Each of reinforcement members 811 to 814, 821 to 826 is a plate-shaped member made of metal, for example.

Each of reinforcement members 811 to 814 is formed to be longer in the first direction, and fixed (for example, fastened) to bottom wall 921. Reinforcement members 811, 812, 813, 814 are disposed along the second direction, in this order, spaced apart from each other.

Reinforcement members 821, 822 are formed between reinforcement member 811 and reinforcement member 812, and longer in the second direction. Reinforcement member 821 and reinforcement member 822 are spaced apart from each other in the first direction.

Reinforcement members 823, 824 are formed between reinforcement member 812 and reinforcement member 813, and longer in the second direction. Reinforcement member 823 and reinforcement member 824 are spaced apart from each other in the first direction.

Reinforcement members 825, 826 are formed between reinforcement member 813 and reinforcement member 814, and longer in the second direction. Reinforcement member 825 and reinforcement member 826 are spaced apart from each other in the first direction.

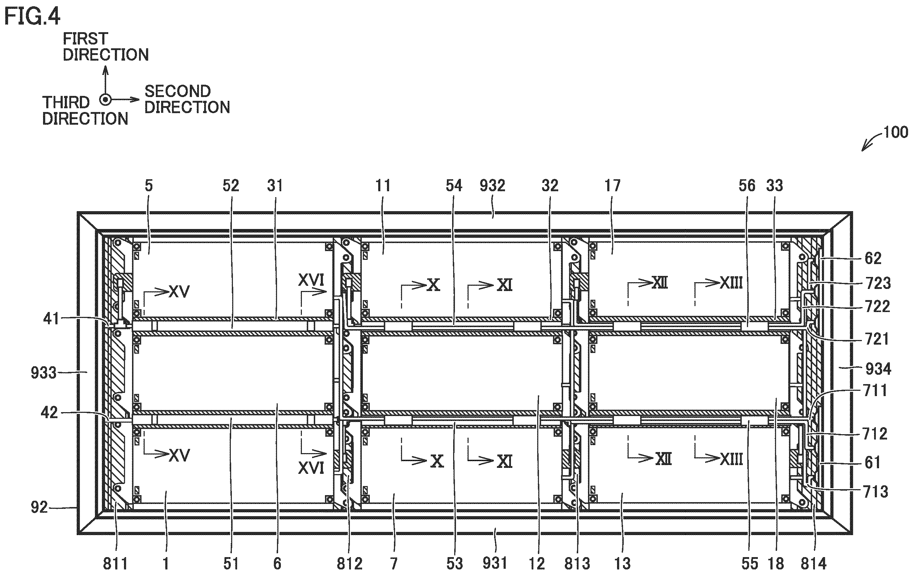

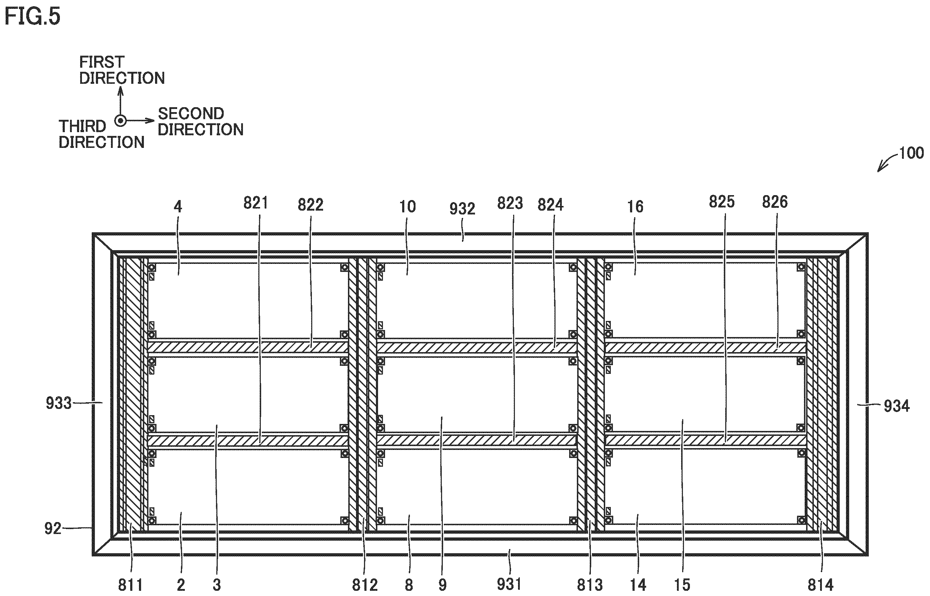

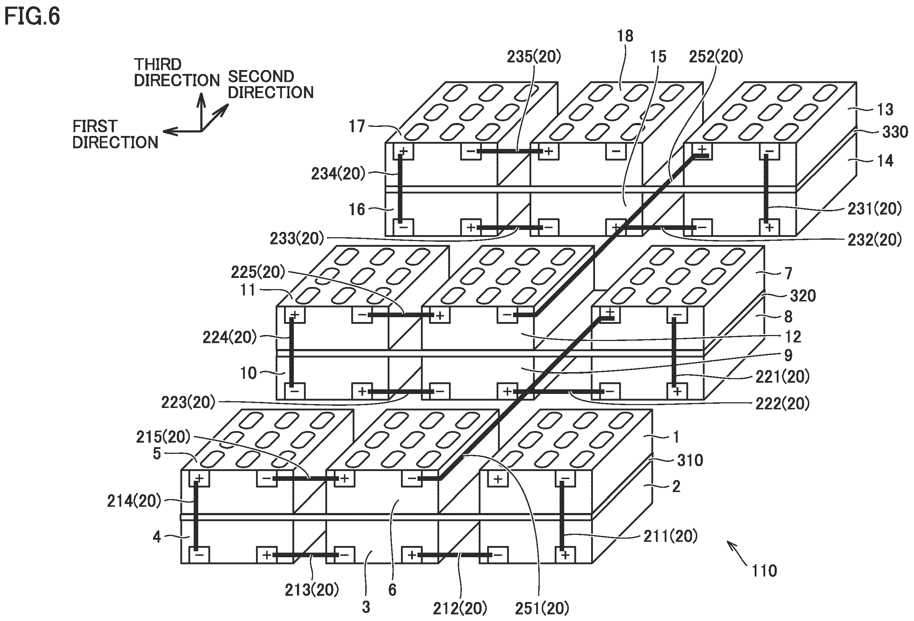

Referring to Fig. 4 to Fig. 6, power storage unit 110 illustrated in Fig. 2 will be described. Fig. 4 is a view of the interior of power storage device 100 from which upper case 91 is removed, viewed from above the power storage device 100. Fig. 5 is a view of the interior of power storage device 100 from which coolers 31 to 33 and components positioned above the coolers 31 to 33 are removed, viewed from above the power storage device 100. Fig. 6 is a view illustrating electrical connection of power storage unit 110.

Referring to Fig. 4 and Fig. 5, power storage unit 110 includes power storage modules 1 to 18. Power storage modules 1, 5, 6 are disposed above the cooler 31, and power storage modules 2 to 4 are disposed below the cooler 31. Power storage modules 7, 11, 12 are disposed above the cooler 32, and power storage modules 8 to 10 are disposed below the cooler 32. Power storage modules 13, 17, 18 are disposed above the cooler 33, and power storage modules 14 to 16 are disposed below the cooler 33.

Referring to Fig. 4 to Fig. 6, power storage module 1, power storage module 6, and power storage module 5 are disposed in this order along the first direction. Below the power storage module 1, the power storage module 6, and the power storage module 5, a cooling plate 310 of cooler 31 is disposed. Below the cooling plate 310, power storage modules 2 to 4 are disposed. Power storage module 2 is disposed below the power storage module 1. Power storage module 3 is disposed below the power storage module 6. Power storage module 4 is disposed below the power storage module 5. Cooler 31 is configured to cool power storage modules 1 to 6.

Referring to Fig. 5, reinforcement member 821 is disposed between power storage module 2 and power storage module 3. Reinforcement member 822 is disposed between power storage module 3 and power storage module 4. Power storage modules 2 to 4 are disposed between reinforcement member 811 and reinforcement member 812.

Referring to Fig. 4 to Fig. 6, power storage module 7, power storage module 12, and power storage module 11 are disposed in this order along the first direction. Below the power storage module 7, the power storage module 12, and the power storage module 11, a cooling plate 320 of cooler 32 is disposed. Below the cooling plate 320, power storage modules 8 to 10 are disposed. Power storage module 8 is disposed below the power storage module 7. Power storage module 9 is disposed below the power storage module 12. Power storage module 10 is disposed below the power storage module 11. Cooler 32 is configured to cool power storage modules 7 to 12.

Referring to Fig. 5, reinforcement member 823 is disposed between power storage module 8 and power storage module 9. Reinforcement member 824 is disposed between power storage module 9 and power storage module 10. Power storage modules 8 to 10 are disposed between reinforcement member 812 and reinforcement member 813.

Referring to Fig. 4 to Fig. 6, power storage module 13, power storage module 18, and power storage module 17 are disposed in this order along the first direction. Below the power storage module 13, the power storage module 18, and the power storage module 17, a cooling plate 330 of cooler 33 is disposed. Below the cooling plate 330, power storage modules 14 to 16 are disposed. Power storage module 14 is disposed below the power storage module 13. Power storage module 15 is disposed below the power storage module 18. Power storage module 16 is disposed below the power storage module 17. Cooler 33 is configured to cool power storage modules 13 to 18.

Referring to Fig. 5, reinforcement member 825 is disposed between power storage module 14 and power storage module 15. Reinforcement member 826 is disposed between power storage module 15 and power storage module 16. Power storage modules 14 to 16 are disposed between reinforcement member 813 and reinforcement member 814.

Referring to Fig. 6, each of power storage modules 1 to 18 includes a plurality of power storage cells. In an example, each of power storage modules 1 to 18 includes 24 power storage cells. Each power storage cell is equipped with an exhaust valve that is for discharging gas from the power storage cell when the internal pressure of the power storage cell rises.

Power storage modules 1 to 18 are connected in series by bus bar 20. Bus bar 20 includes bus bars 211 to 215, bus bars 221 to 225, bus bars 231 to 235, a bus bar 251, and a bus bar 252.

A positive terminal of power storage module 1 is a general positive terminal of power storage unit 110. A negative terminal of power storage module 1 and a positive terminal of power storage module 2 are connected to each other by bus bar 211. A negative terminal of power storage module 2 and a positive terminal of power storage module 3 are connected to each other by bus bar 212. A negative terminal of power storage module 3 and a positive terminal of power storage module 4 are connected to each other by bus bar 213. A negative terminal of power storage module 4 and a positive terminal of power storage module 5 are connected to each other by bus bar 214. A negative terminal of power storage module 5 and a positive terminal of power storage module 6 are connected to each other by bus bar 215. A negative terminal of power storage module 6 and a positive terminal of power storage module 7 are connected to each other by bus bar 251. That is, bus bar 251 is connected to power storage module 6 and power storage module 7. Bus bar 251 passes between power storage module 1 and power storage module 6.

A negative terminal of power storage module 7 and a positive terminal of power storage module 8 are connected to each other by bus bar 221. A negative terminal of power storage module 8 and a positive terminal of power storage module 9 are connected to each other by bus bar 222. A negative terminal of power storage module 9 and a positive terminal of power storage module 10 are connected to each other by bus bar 223. A negative terminal of power storage module 10 and a positive terminal of power storage module 11 are connected to each other by bus bar 224. A negative terminal of power storage module 11 and a positive terminal of power storage module 12 are connected to each other by bus bar 225. A negative terminal of power storage module 12 and a positive terminal of power storage module 13 are connected to each other by bus bar 252. That is, bus bar 252 is connected to power storage module 12 and power storage module 13. Bus bar 252 passes between power storage module 7 and power storage module 12.

A negative terminal of power storage module 13 and a positive terminal of power storage module 14 are connected to each other by bus bar 231. A negative terminal of power storage module 14 and a positive terminal of power storage module 15 are connected to each other by bus bar 232. A negative terminal of power storage module 15 and a positive terminal of power storage module 16 are connected to each other by bus bar 233. A negative terminal of power storage module 16 and a positive terminal of power storage module 17 are connected to each other by bus bar 234. A negative terminal of power storage module 17 and a positive terminal of power storage module 18 are connected to each other by bus bar 235. A negative terminal of power storage module 18 is a general negative terminal of power storage unit 110.

It should be noted that the electrical connection relationship between power storage modules 1 to 18 is not limited to the connection relationship illustrated in Fig. 6. Likewise, the number of power storage modules included in power storage unit 110 is not limited to 18. The number of power storage modules included in power storage unit 110 is simply required to be two or more.

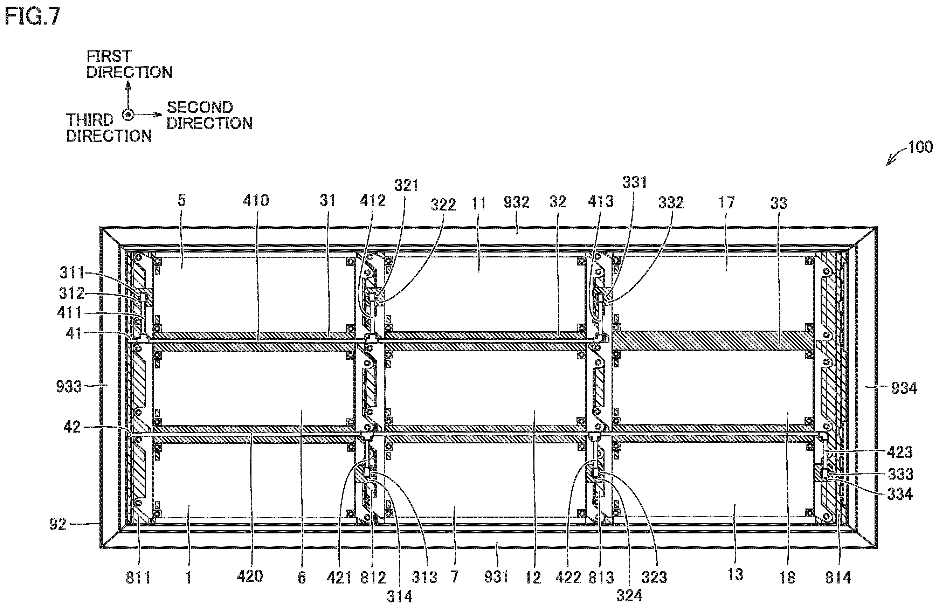

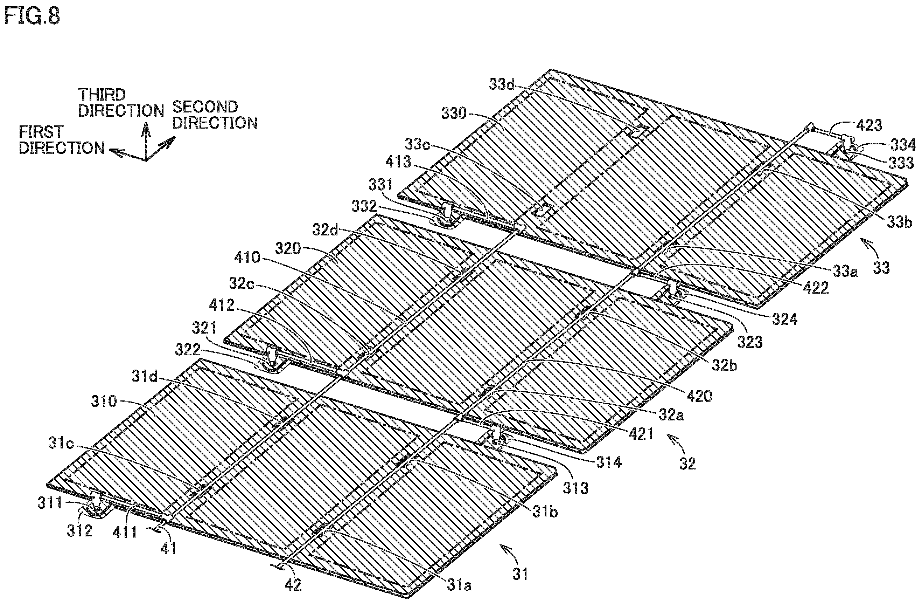

Referring to Fig. 7 and Fig. 8, cooling pipes 41, 42 and coolers 31 to 33 will be described. Fig. 7 is a view of the interior of power storage device 100 from which upper case 91, wire harness 70, bus bar 20, and resin member 50 are removed, viewed from above the power storage device 100. Fig. 8 is a view of cooling pipes 41, 42 and coolers 31 to 33.

Referring to Fig. 7 and Fig. 8, cooling pipe 41 is a pipe for supplying a refrigerant to cooling plates 310, 320, 330. Cooling pipe 41 is connected to cooling plates 310, 320, 330. Cooling pipe 41 includes a cooling pipe 410 extending in the second direction, as well as cooling pipes 411 to 413 branched from cooling pipe 410 and extending in the first direction. Cooling pipe 410 passes between power storage module 6 and power storage module 5, and also between power storage module 12 and power storage module 11. Cooling pipe 411 passes between side wall 933 and power storage module 5. Cooling pipe 412 passes between power storage module 5 and power storage module 11. Cooling pipe 413 passes between power storage module 11 and power storage module 17.

Cooling pipe 42 is a pipe for discharging the refrigerant from cooling plates 310, 320, 330. Cooling pipe 42 is connected to cooling plates 310, 320, 330. Cooling pipe 42 includes a cooling pipe 420 extending in the second direction, as well as cooling pipes 421 to 423 branched from cooling pipe 420 and extending in a direction opposite to the first direction. Cooling pipe 420 passes between power storage module 1 and power storage module 6, and also between power storage module 7 and power storage module 12, and also between power storage module 13 and power storage module 18. Cooling pipe 421 passes between power storage module 1 and power storage module 7. Cooling pipe 422 passes between power storage module 7 and power storage module 13. Cooling pipe 423 passes between power storage module 13 and side wall 934.

Coolers 31 to 33 are made of metal (for example, aluminum). Cooler 31 includes cooling plate 310, cooling ports 311, 313, and port support portions 312, 314. Cooler 32 includes cooling plate 320, cooling ports 321, 323, and port support portions 322, 324. Cooler 33 includes cooling plate 330, cooling ports 331, 333, and port support portions 332, 334.

Each of cooling plates 310, 320, 330 has a rectangular plate-like outer shape, for example. Inside the cooling plates 310, 320, 330, the refrigerant supplied from cooling pipe 41 passes.

Cooling port 311 is a port through which the refrigerant flows into cooling plate 310. To cooling port 311, cooling pipe 411 is connected. Port support portion 312 supports cooling port 311. Cooling port 313 is a port through which the refrigerant flows out of cooling plate 310. To cooling port 313, cooling pipe 421 is connected. Port support portion 314 supports cooling port 313.

Cooling port 321 is a port through which the refrigerant flows into cooling plate 320. To cooling port 321, cooling pipe 412 is connected. Port support portion 322 supports cooling port 321. Cooling port 323 is a port through which the refrigerant flows out of cooling plate 320. To cooling port 323, cooling pipe 422 is connected. Port support portion 324 supports cooling port 323.

Cooling port 331 is a port through which the refrigerant flows into cooling plate 330. To cooling port 331, cooling pipe 413 is connected. Port support portion 332 supports cooling port 331. Cooling port 333 is a port through which the refrigerant flows out of cooling plate 330. To cooling port 333, cooling pipe 423 is connected. Port support portion 334 supports cooling port 333.

In cooling plate 310, holes 31a, 31b, 31c, 31d are formed. Through the holes 31a, 31b, fixation portions of a resin member 51 (see Fig. 2, Fig. 4) pass. Through the holes 31c, 31d, fixation portions of a resin member 52 (see Fig. 2, Fig. 4) pass. Instead of holes 31a to 31d, notches may be formed in cooling plate 310, through which the fixation portions of resin members 51, 52 pass.

In cooling plate 320, holes 32a, 32b, 32c, 32d are formed. Through the holes 32a, 32b, fixation portions of a resin member 53 (see Fig. 2, Fig. 4) pass. Through the holes 32c, 32d, fixation portions of a resin member 54 (see Fig. 2, Fig. 4) pass. Instead of holes 32a to 32d, notches may be formed in cooling plate 320, through which the fixation portions of resin members 53, 54 pass.

In cooling plate 330, holes 33a, 33b, 33c, 33d are formed. Through the holes 33a, 33b, fixation portions of a resin member 55 (see Fig. 2, Fig. 4) pass. Through the holes 33c, 33d, fixation portions of a resin member 56 (see Fig. 2, Fig. 4) pass. Instead of holes 33a to 33d, notches may be formed in cooling plate 330, through which the fixation portions of resin members 55, 56 pass.

Referring to Fig. 2 and Fig. 4, resin member 50 will be described. Resin member 50 includes resin members 51 to 56. Each of resin members 51 to 56 includes an upper resin member and a lower resin member.

More specifically, resin member 51 includes an upper resin member 511, and a lower resin member 512 disposed below the upper resin member 511. Resin member 51 is disposed between power storage module 1 and power storage module 6. Resin member 51 is disposed above the reinforcement member 821 (see Fig. 5). Resin member 51 covers cooling pipe 42 and bus bar 251 (see Fig. 6) between power storage module 1 and power storage module 6.

Resin member 52 includes an upper resin member 521, and a lower resin member 522 disposed below the upper resin member 521. Resin member 52 is disposed between power storage module 6 and power storage module 5. Resin member 52 is disposed above the reinforcement member 822 (see Fig. 5). Resin member 52 covers cooling pipe 41 between power storage module 6 and power storage module 5.

Resin member 53 includes an upper resin member 531, and a lower resin member 532 disposed below the upper resin member 531. Resin member 53 is disposed between power storage module 7 and power storage module 12. Resin member 53 is disposed above the reinforcement member 823 (see Fig. 5). Resin member 53 covers cooling pipe 42 and bus bar 252 (see Fig. 6) between power storage module 7 and power storage module 12.

Resin member 54 includes an upper resin member 541, and a lower resin member 542 disposed below the upper resin member 541. Resin member 54 is disposed between power storage module 12 and power storage module 11. Resin member 54 is disposed above the reinforcement member 824 (see Fig. 5). Resin member 54 covers cooling pipe 41 between power storage module 12 and power storage module 11.

Resin member 55 includes an upper resin member 551, and a lower resin member 552 disposed below the upper resin member 551. Resin member 55 is disposed between power storage module 13 and power storage module 18. Resin member 55 is disposed above the reinforcement member 825 (see Fig. 5). Resin member 55 covers cooling pipe 42 between power storage module 13 and power storage module 18.

Resin member 56 includes an upper resin member 561, and a lower resin member 562 disposed below the upper resin member 561. Resin member 56 is disposed between power storage module 18 and power storage module 17. Resin member 56 is disposed above the reinforcement member 826 (see Fig. 5).

Referring to Fig. 2, Fig. 4, and Fig. 5, SBMs 61, 62 and wire harness 70 will be described. SBMs 61, 62 are disposed inside the accommodation case 90. SBMs 61, 62 are units for monitoring the state of the power storage modules (such as, for example, the temperature, voltage, and/or electric current of the power storage modules). Each of SBMs 61, 62 is an example of an "electrical apparatus" according to the present disclosure. SBM 61 monitors the state of the upper-tier power storage modules, namely, power storage modules 1, 5 to 7, 11 to 13, 17, 18. SBM 62 monitors the state of the lower-tier power storage modules, namely, power storage modules 2 to 4, 8 to 10, 14 to 16.

Wire harness 70 includes wire harnesses 711 to 713 and wire harnesses 721 to 723. Wire harnesses 711 to 713 are connected to SBM 61. More specifically, wire harness 711 connects power storage modules 1, 5, 6 to SBM 61. Wire harness 712 connects power storage modules 7, 11, 12 to SBM 61. Wire harness 713 connects power storage modules 13, 17, 18 to SBM 61.

Wire harness 711 passes between power storage module 7 and power storage module 12, and also between power storage module 13 and power storage module 18. Wire harness 711 is supported between power storage module 7 and power storage module 12 by resin member 53. Wire harness 711 is supported between power storage module 13 and power storage module 18 by resin member 55. Wire harness 711 is branched into three branch lines, and the three branch lines are connected to power storage modules 1, 5, 6, respectively.

Wire harness 712 passes between power storage module 13 and power storage module 18. Wire harness 712 is supported between power storage module 13 and power storage module 18 by resin member 55. Wire harness 712 is branched into three branch lines, and the three branch lines are connected to power storage modules 7, 11, 12, respectively.

Wire harness 713 passes between side wall 934 and power storage modules 13, 17, 18. Wire harness 713 is branched into three branch lines, and the three branch lines are connected to power storage modules 13, 17, 18, respectively.

Wire harnesses 721 to 723 are connected to SBM 62. More specifically, wire harness 721 connects power storage modules 2 to 4 to SBM 62. Wire harness 722 connects power storage modules 8 to 10 to SBM 62. Wire harness 723 connects power storage modules 14 to 16 to SBM 62.

Wire harness 721 passes between power storage module 12 and power storage module 11, and also between power storage module 18 and power storage module 17, and also between power storage module 5 and power storage module 11. Wire harness 721 is supported between power storage module 12 and power storage module 11 by resin member 54. Wire harness 721 is supported between power storage module 18 and power storage module 17 by resin member 56. Wire harness 721 goes down between power storage module 5 and power storage module 11. Wire harness 721 is branched into three branch lines, and the three branch lines are connected to power storage modules 2 to 4, respectively.

Wire harness 722 passes between power storage module 18 and power storage module 17, and also between power storage module 11 and power storage module 17. Wire harness 722 is supported between power storage module 18 and power storage module 17 by resin member 56. Wire harness 722 goes down between power storage module 11 and power storage module 17. Wire harness 722 is branched into three branch lines, and the three branch lines are connected to power storage modules 8 to 10, respectively.

Wire harness 723 goes down between side wall 934 and power storage module 17. Wire harness 723 is branched into three branch lines, and the three branch lines are connected to power storage modules 14 to 16, respectively.

In the present embodiment, wire harness 70 is a wiring connected to SBMs 61, 62; however, wire harness 70 is not limited to this configuration. Wire harness 70 may be a wiring connected to an electrical apparatus other than SBMs 61, 62. For example, when a voltage sensor is accommodated inside the accommodation case 90, wire harness 70 may be a wiring connected to the voltage sensor. When a current sensor is accommodated inside the accommodation case 90, wire harness 70 may be a wiring connected to the current sensor. When a battery electronic control unit (ECU) is accommodated inside the accommodation case 90, wire harness 70 may be a wiring connected to the battery ECU.

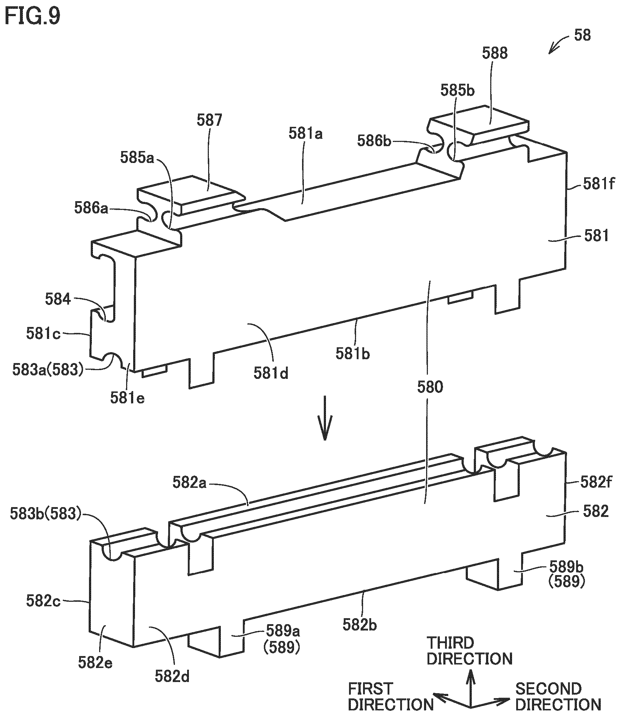

Referring to Fig. 9 to Fig. 13, resin members 53 to 56 illustrated in Fig. 2 and Fig. 4 will be described in detail.

Fig. 9 is a perspective view of a resin member adopted as each of resin members 53 to 56 illustrated in Fig. 2 and Fig. 4. Referring to Fig. 9, a resin member 58 is made of a fire-resistant, heat-insulating resin. Resin member 58 is adopted as each of resin members 53 to 56 illustrated in Fig. 2 and Fig. 4. Resin member 58 includes a resin main body 580 and a fixation portion 589.

Resin main body 580 is disposed above the cooling plates 310, 320, 330 (see Fig. 8). Resin member 58 includes an upper resin member 581, and a lower resin member 582 disposed below the upper resin member 581. Lower resin member 582 has fixation portion 589. Resin main body 580 includes upper resin member 581, as well as a portion of lower resin member 582 excluding the fixation portion 589.

Upper resin member 581 is adopted as each of upper resin members 531, 541, 551, 561 illustrated in Fig. 2. Lower resin member 582 is adopted as each of lower resin members 532, 542, 552, 562 illustrated in Fig. 2. Upper resin member 581 and lower resin member 582 are fixed to each other by a snap-fit structure, for example.

Fixation portion 589 includes a fixation portion 589a and a fixation portion 589b. Fixation portion 589 protrudes downward from resin main body 580. Fixation portion 589 is fixed to a reinforcement member among reinforcement members 823 to 826 (see Fig. 3) that is positioned below the fixation portion 589.

Upper resin member 581 has an upper surface 581a and a lower surface 581b which are spaced apart from each other in the third direction. Upper resin member 581 has side surfaces 581c, 581d which are spaced apart from each other in the first direction. Each of side surface 581c and side surface 581d is formed to extend in the second direction. Upper resin member 581 has side surfaces 581e, 581f which are spaced apart from each other in the second direction.

Lower resin member 582 has an upper surface 582a and a lower surface 582b which are spaced apart from each other in the third direction. Upper surface 582a faces lower surface 581b of upper resin member 581. Lower resin member 582 has side surfaces 582c, 582d which are spaced apart from each other in the first direction. Each of side surface 582c and side surface 582d is formed to extend in the second direction. Lower resin member 582 has side surfaces 582e, 582f which are spaced apart from each other in the second direction.

The length of upper resin member 581 in the second direction is the same as the length of lower resin member 582 in the second direction. In the present disclosure, "the lengths are the same" encompasses a circumstance where the lengths completely coincide with each other, as well as a circumstance where the lengths are substantially the same as each other. In the present disclosure, "substantially the same" means that a small difference due to variations in production and the like is tolerated. Preferably, the length of upper resin member 581 in the second direction is the same as the length of each power storage module in the second direction.

In resin member 58, a hollow 583 is formed through which cooling pipe 410 or cooling pipe 420 illustrated in Fig. 8 can pass. More specifically, in lower surface 581b of upper resin member 581, a notch 583a is formed. In upper surface 582a of lower resin member 582, a notch 583b is formed. By a combination of notch 583a and notch 583b, hollow 583 is formed in resin member 58 through which cooling pipe 410 or cooling pipe 420 can pass. For making cooling pipe 410 (or cooling pipe 420) pass through the hollow 583, it is possible to firstly place cooling pipe 410 (or cooling pipe 420) in notch 583b of lower resin member 582 and then fix upper resin member 581 to lower resin member 582. As a result, cooling pipe 410 (or cooling pipe 420) is sandwiched between upper resin member 581 and lower resin member 582. In other words, cooling pipe 410 (or cooling pipe 420) is covered with resin member 58.

In upper resin member 581, a notch 584 is formed in which bus bar 252 illustrated in Fig. 6 can engage. More specifically, in side surface 581c, notch 584 is formed in which bus bar 252 can engage. With bus bar 252 engaged in notch 584, bus bar 252 is partially covered with resin member 58.

Upper resin member 581 has case support portions 587, 588 that protrude upward and that support upper case 91 (see Fig. 2). More specifically, case support portions 587, 588 are provided on upper surface 581a of upper resin member 581 in such a manner to protrude upward from upper surface 581a.

Case support portion 587 is disposed at a position located away from fixation portion 589a in the third direction. Case support portion 588 is disposed at a position located away from fixation portion 589b in the third direction. That is, case support portion 587 and fixation portion 589a are disposed on a straight line vertical to bottom wall 921 (see Fig. 3). Similarly, case support portion 588 and fixation portion 589b are disposed on a straight line vertical to bottom wall 921.

With the case support portions 587, 588 provided to resin member 58, power storage unit 110 (see Fig. 2) can be protected from impact applied from above the upper case 91 (see Fig. 2). In addition, with the case support portion 587 and fixation portion 589a disposed on a straight line vertical to bottom wall 921, and also with the case support portion 588 and fixation portion 589b disposed on a straight line vertical to bottom wall 921, resistance against impact applied from above the upper case 91 is enhanced.

In the present embodiment, the number of case support portions provided on upper surface 581a of upper resin member 581 is two; however, the number of case support portions is not limited to this configuration. The number of case support portions may be one, or may be three or more. With a plurality of case support portions provided on upper surface 581a, resistance against impact applied from above the upper case 91 is enhanced.

Upper resin member 581 can support two wire harnesses among wire harnesses 711 to 713, 721 to 723 illustrated in Fig. 4. More specifically, case support portion 587 has wiring support portions 585a, 586a, and case support portion 588 has wiring support portions 585b, 586b. Wiring support portions 585a, 586a, 585b, 586b are provided at positions higher than hollow 583 and notch 584.

Wiring support portion 585a is the inner surface of a notch that is formed in case support portion 587 in such a manner to open in a direction opposite to the first direction. Wiring support portion 585b is the inner surface of a notch that is formed in case support portion 588 in such a manner to open in a direction opposite to the first direction. Wiring support portions 585a, 585b support a certain wire harness among wire harnesses 711 to 713, 721 to 723.

Wiring support portion 586a is the inner surface of a notch that is formed in case support portion 587 in such a manner to open in the first direction. Wiring support portion 586b is the inner surface of a notch that is formed in case support portion 588 in such a manner to open in the first direction. Wiring support portions 586a, 586b support another wire harness among wire harnesses 711 to 713, 721 to 723.

With the wiring support portions 585a, 586a, 585b, 586b provided at positions higher than hollow 583 and notch 584, it is possible to place wire harnesses 711 to 713, 721 to 723 after covering at least one of cooling pipe 410, cooling pipe 420, and bus bar 252 with resin member 58. This provides good assemblability.

Moreover, with the case support portions 587, 588 provided to protrude upward from upper surface 581a of upper resin member 581, a gap can be formed between upper surface 581a of resin member 58 and upper case 91 (see Fig. 2). Generally, when the internal pressure of a power storage cell of a power storage module rises to break the exhaust valve of the power storage cell, hot gas is discharged from the power storage cell. When hot gas is discharged from one of the power storage cells, an adjacent power storage cell produces smoke like a chain reaction. The hot gas contains electrically-conductive foreign matter (debris), and when the debris builds up in the vicinity of the power storage module, the pitch of smoke production rises in other power storage cells of the power storage module. However, in the present embodiment, a gap is formed between upper surface 581a of resin member 58 and upper case 91. Because of this, even when hot gas is discharged from one of the power storage cells of the power storage module, build-up of debris in the vicinity of the power storage module can be suppressed. As a result, a rise of the pitch of smoke production during a chain of smoke production events of power storage cells can be suppressed.

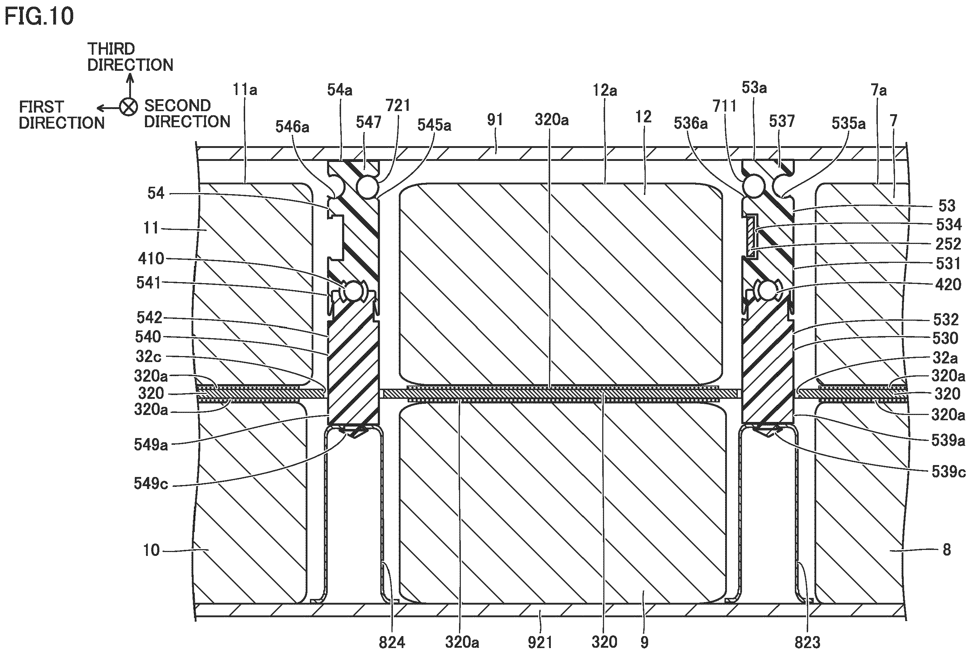

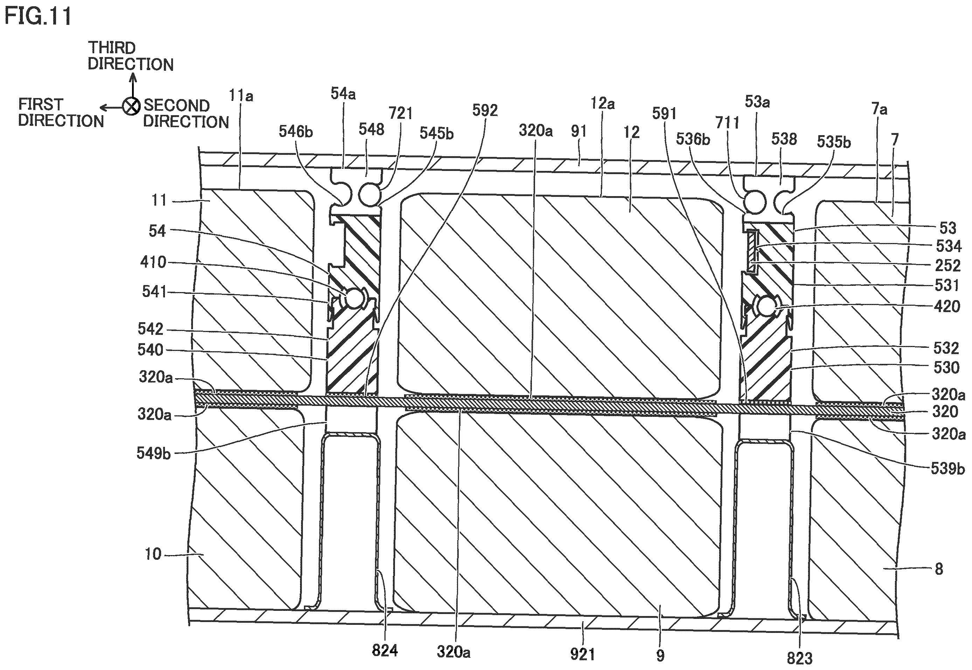

Fig. 10 is a cross-sectional view at the line X-X drawn in Fig. 4. Fig. 11 is a cross-sectional view at the line XI-XI drawn in Fig. 4. Referring to Fig. 10 and Fig. 11, power storage module 7, power storage module 12, and power storage module 11 are disposed in this order along the first direction. Power storage module 12 is spaced apart from power storage module 7 in the first direction. Power storage module 11 is spaced apart from power storage module 12 in the first direction.

Power storage module 8 is disposed below the power storage module 7. Power storage module 9 is disposed below the power storage module 12. Power storage module 10 is disposed below the power storage module 11. Between power storage module 8 and power storage module 9, reinforcement member 823 is disposed. Between power storage module 9 and power storage module 10, reinforcement member 824 is disposed.

Power storage module 7, power storage module 12, power storage module 8, and power storage module 9 are examples of a "first power storage module", a "second power storage module", a "third power storage module", and a "fourth power storage module" according to the present disclosure, respectively.

Cooling plate 320 is disposed below the power storage module 7, the power storage module 12, and the power storage module 11. Below the cooling plate 320, power storage modules 8 to 10 are disposed. Cooling plate 320 is disposed between power storage module 7 and power storage module 8, and also between power storage module 12 and power storage module 9, and also between power storage module 11 and power storage module 10. Cooling plate 320 is disposed above the reinforcement members 823, 824.

Between cooling plate 320 and power storage module 7, and also between cooling plate 320 and power storage module 12, and also between cooling plate 320 and power storage module 11, and also between cooling plate 320 and power storage module 8, and also between cooling plate 320 and power storage module 9, and also between cooling plate 320 and power storage module 10, a thermally conductive material 320a is disposed. Thermally conductive material 320a includes a material that has a thermal conductivity higher than air, and it is more thermally conductive than air. In an example, thermally conductive material 320a includes a paste-form, silicone-based material. With the thermally conductive material 320a provided between power storage modules 7 to 12 and cooling plate 320, thermal conduction between power storage modules 7 to 12 and cooling plate 320 is enhanced.

Between power storage module 7 and power storage module 12, resin member 53 is disposed. Resin member 53 includes a resin main body 530, a fixation portion 539a, and a fixation portion 539b. Resin member 53 includes upper resin member 531, and lower resin member 532 disposed below the upper resin member 531. Lower resin member 532 has fixation portion 539a and fixation portion 539b. Resin main body 530 includes upper resin member 531, as well as a portion of lower resin member 532 excluding the fixation portions 539a, 539b. Fixation portions 539a, 539b protrude downward from resin main body 530.

Fixation portion 539a passes through the hole 32a formed in cooling plate 320, and is fixed to reinforcement member 823. In an example, fixation portion 539a has a protruded portion 539c. Protruded portion 539c engages in a notch formed in reinforcement member 823, and thereby, fixation portion 539a is fixed to reinforcement member 823. Fixation portion 539a may be fastened to reinforcement member 823.

Fixation portion 539b passes through the hole 32b (see Fig. 8) formed in cooling plate 320, and is fixed to reinforcement member 823. The method for fixing fixation portion 539b to reinforcement member 823 may be the same as the method for fixing fixation portion 539a to reinforcement member 823, or may be different from the method for fixing fixation portion 539a to reinforcement member 823.

With the resin member 53 disposed between power storage module 7 and power storage module 12, even when the temperature of one of power storage module 7 and power storage module 12 becomes high, transfer of heat to the other can be suppressed. In other words, with the resin member 53 thus disposed, diffusion of heat to an adjacent power storage module can be suppressed.

Cooling pipe 420 passes between power storage module 7 and power storage module 12. Between power storage module 7 and power storage module 12, cooling pipe 420 is covered with resin member 53. More specifically, cooling pipe 420 is sandwiched between upper resin member 531 and lower resin member 532. Alternatively, cooling pipe 420 may be covered with resin member 53 by insert molding.

With the cooling pipe 420 covered with resin member 53, adhesion of condensation water to the surface of cooling pipe 420 between power storage module 7 and power storage module 12 can be suppressed. As a result, short-circuiting between power storage module 7 and power storage module 12 can be suppressed.

In addition, with the cooling pipe 420 covered with resin member 53, cooling pipe 420 can be protected from impact and heat.

Resin main body 530 is disposed above the cooling plate 320. As illustrated in Fig. 11, power storage device 100 (see Fig. 1) further comprises a filling material 591 disposed between cooling plate 320 and resin main body 530. As the filling material 591, thermally conductive material 320a can be used, for example. As the filling material 591, a sealing material such as Eptsealer may be used.

With the filling material 591 disposed between cooling plate 320 and resin main body 530, cooling plate 320 and resin main body 530 come into sufficient contact with each other. As a result, adhesion of condensation water to the surface of cooling plate 320 can be suppressed.

Bus bar 252 is connected to power storage module 12. Bus bar 252 passes between power storage module 7 and power storage module 12. Between power storage module 7 and power storage module 12, bus bar 252 is covered with resin member 53. More specifically, bus bar 252 is engaged in a notch 534 formed in upper resin member 531. In other words, between power storage module 7 and power storage module 12, bus bar 252 is partially covered with upper resin member 531.

With the bus bar 252 covered with resin member 53, an event of electrically-conductive foreign matter (debris) from the power storage module coming into contact with bus bar 252 can be suppressed. As a result, short-circuiting caused by debris can be suppressed.

In addition, with the bus bar 252 covered with resin member 53, bus bar 252 can be protected from impact and heat.

Bus bar 252 is covered with resin member 53, and in the vicinity of bus bar 252, cooling pipe 420 is disposed. As a result, degradation of heat dissipation performance of bus bar 252 can be suppressed.

Resin main body 530 is composed of upper resin member 531 and lower resin member 532, and cooling pipe 420 is sandwiched between upper resin member 531 and lower resin member 532, and bus bar 252 is covered with upper resin member 531.
As a result, cooling pipe 420 and bus bar 252 can be covered with resin member 53, without being affected by positional variations of bus bar 252 in the height direction.

Upper resin member 531 has case support portions 537, 538. Each of case support portions 537, 538 protrudes upward and supports upper case 91. Case support portion 537 has wiring support portions 535a, 536a. Case support portion 538 has wiring support portions 535b, 536b.

Wiring support portion 535a is the inner surface of a notch that is formed in case support portion 537 in such a manner to open in a direction opposite to the first direction. Wiring support portion 535b is the inner surface of a notch that is formed in case support portion 538 in such a manner to open in a direction opposite to the first direction.

Wiring support portion 536a is the inner surface of a notch that is formed in case support portion 537 in such a manner to open in the first direction. Wiring support portion 536b is the inner surface of a notch that is formed in case support portion 538 in such a manner to open in the first direction.

Wire harness 711 passes between power storage module 7 and power storage module 12. In other words, wire harness 711 is disposed between power storage module 7 and power storage module 12. Between power storage module 7 and power storage module 12, wire harness 711 is disposed above the bus bar 252. Wire harness 711 is supported by resin member 53. More specifically, wire harness 711 is supported by wiring support portions 536a, 536b.

An upper end 53a of resin member 53 is positioned above an upper end 7a of power storage module 7 and also above an upper end 12a of power storage module 12. As a result, power storage modules 7, 12 can be protected from impact applied from above the upper case 91.

Between power storage module 12 and power storage module 11, resin member 54 is disposed. Resin member 54 includes a resin main body 540, a fixation portion 549a, and a fixation portion 549b. Resin member 54 includes upper resin member 541, and lower resin member 542 disposed below the upper resin member 541. Lower resin member 542 has fixation portion 549a and fixation portion 549b. Resin main body 540 includes upper resin member 541, as well as a portion of lower resin member 542 excluding the fixation portions 549a, 549b. Fixation portions 549a, 549b protrude downward from resin main body 540.

Fixation portion 549a passes through the hole 32c formed in cooling plate 320, and is fixed to reinforcement member 824. In an example, fixation portion 549a has a protruded portion 549c. Protruded portion 549c engages in a notch formed in reinforcement member 824, and thereby, fixation portion 549a is fixed to reinforcement member 824. Fixation portion 549a may be fastened to reinforcement member 824.

Fixation portion 549b passes through the hole 32d (see Fig. 8) formed in cooling plate 320, and is fixed to reinforcement member 824. The method for fixing fixation portion 549b to reinforcement member 824 may be the same as the method for fixing fixation portion 549a to reinforcement member 824, or may be different from the method for fixing fixation portion 549a to reinforcement member 824.

With the resin member 54 disposed between power storage module 11 and power storage module 12, even when the temperature of one of power storage module 11 and power storage module 12 becomes high, transfer of heat to the other can be suppressed. In other words, with the resin member 54 thus disposed, diffusion of heat to an adjacent power storage module can be suppressed.

Cooling pipe 410 passes between power storage module 11 and power storage module 12. Between power storage module 11 and power storage module 12, cooling pipe 410 is covered with resin member 54. More specifically, cooling pipe 410 is sandwiched between upper resin member 541 and lower resin member 542. Alternatively, cooling pipe 410 may be covered with resin member 54 by insert molding.

With the cooling pipe 410 covered with resin member 54, adhesion of condensation water to the surface of cooling pipe 410 between power storage module 11 and power storage module 12 can be suppressed. As a result, short-circuiting between power storage module 11 and power storage module 12 can be suppressed.

In addition, with the cooling pipe 410 covered with resin member 54, cooling pipe 410 can be protected from impact and heat.

Resin main body 540 is disposed above the cooling plate 320. As illustrated in Fig. 11, power storage device 100 (see Fig. 1) further comprises a filling material 592 disposed between cooling plate 320 and resin main body 540. As the filling material 592, the same material as filling material 591 may be used, or a different material may be used.

With the filling material 592 disposed between cooling plate 320 and resin main body 540, cooling plate 320 and resin main body 540 come into sufficient contact with each other. As a result, adhesion of condensation water to the surface of cooling plate 320 can be suppressed.

Upper resin member 541 has case support portions 547, 548. Each of case support portions 547, 548 protrudes upward and supports upper case 91. Case support portion 547 has wiring support portions 545a, 546a. Case support portion 548 has wiring support portions 545b, 546b.

Wiring support portion 545a is the inner surface of a notch that is formed in case support portion 547 in such a manner to open in a direction opposite to the first direction. Wiring support portion 545b is the inner surface of a notch that is formed in case support portion 548 in such a manner to open in a direction opposite to the first direction.

Wiring support portion 546a is the inner surface of a notch that is formed in case support portion 547 in such a manner to open in the first direction. Wiring support portion 546b is the inner surface of a notch that is formed in case support portion 548 in such a manner to open in the first direction.

Wire harness 721 passes between power storage module 12 and power storage module 11. In other words, wire harness 721 is disposed between power storage module 12 and power storage module 11. Wire harness 721 is supported by resin member 54. More specifically, wire harness 721 is supported by wiring support portions 545a, 545b.

An upper end 54a of resin member 54 is positioned above the upper end 12a of power storage module 12 and also above an upper end 11a of power storage module 11. As a result, power storage modules 11, 12 can be protected from impact applied from above the upper case 91.

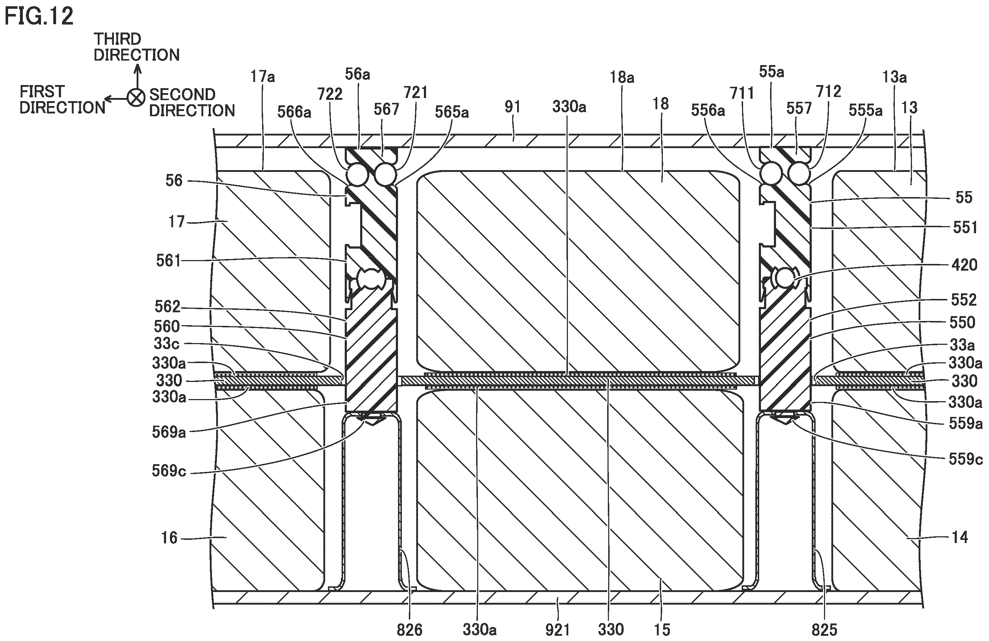

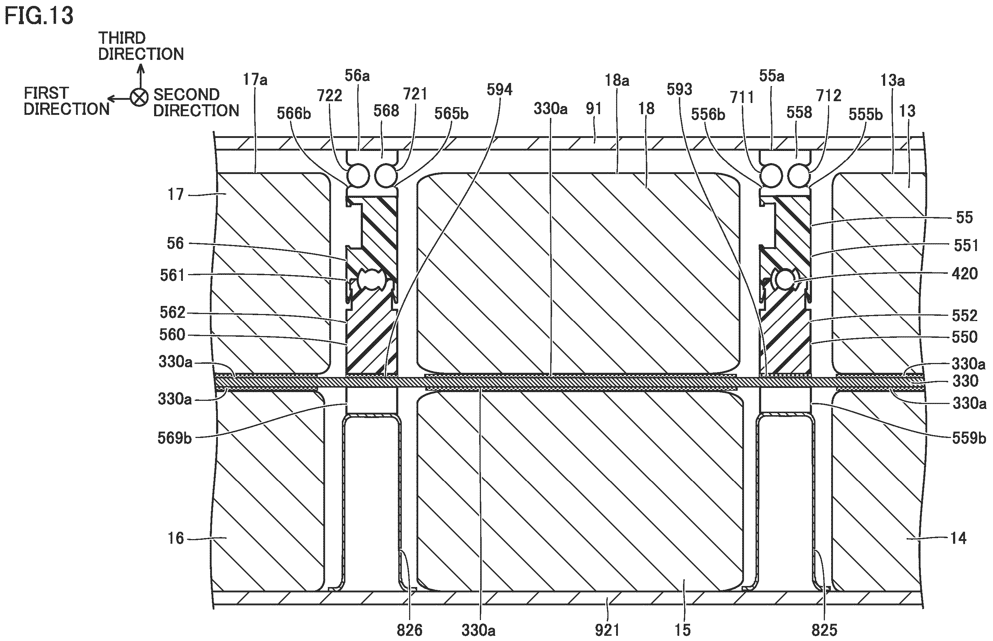

Fig. 12 is a cross-sectional view at the line XII-XII drawn in Fig. 4. Fig. 13 is a cross-sectional view at the line XIII-XIII drawn in Fig. 4. Referring to Fig. 12 and Fig. 13, power storage module 13, power storage module 18, and power storage module 17 are disposed in this order along the first direction. Power storage module 18 is spaced apart from power storage module 13 in the first direction. Power storage module 17 is spaced apart from power storage module 18 in the first direction.

Power storage module 14 is disposed below the power storage module 13. Power storage module 15 is disposed below the power storage module 18. Power storage module 16 is disposed below the power storage module 17. Between power storage module 14 and power storage module 15, reinforcement member 825 is disposed. Between power storage module 15 and power storage module 16, reinforcement member 826 is disposed.

Cooling plate 330 is disposed below the power storage module 13, the power storage module 18, and the power storage module 17. Below the cooling plate 330, power storage modules 14 to 16 are disposed. Cooling plate 330 is disposed between power storage module 13 and power storage module 14, and also between power storage module 18 and power storage module 15, and also between power storage module 17 and power storage module 16. Cooling plate 330 is disposed above the reinforcement members 825, 826.

Between cooling plate 330 and power storage module 13, and also between cooling plate 330 and power storage module 18, and also between cooling plate 330 and power storage module 17, and also between cooling plate 330 and power storage module 14, and also between cooling plate 330 and power storage module 15, and also between cooling plate 330 and power storage module 16, a thermally conductive material 330a is disposed. As the thermally conductive material 330a, the same material as thermally conductive material 320a may be used, or a different material may be used. With the thermally conductive material 330a provided between power storage modules 13 to 18 and cooling plate 330, thermal conduction between power storage modules 13 to 18 and cooling plate 330 is enhanced.

Between power storage module 13 and power storage module 18, resin member 55 is disposed. Resin member 55 includes a resin main body 550, a fixation portion 559a, and a fixation portion 559b. Resin member 55 includes upper resin member 551, and lower resin member 552 disposed below the upper resin member 551.

Lower resin member 552 has fixation portion 559a and fixation portion 559b. Resin main body 550 includes upper resin member 551, as well as a portion of lower resin member 552 excluding the fixation portions 559a, 559b. Fixation portions 559a, 559b protrude downward from resin main body 550.

Fixation portion 559a passes through the hole 33a formed in cooling plate 330, and is fixed to reinforcement member 825. In an example, fixation portion 559a has a protruded portion 559c. Protruded portion 559c engages in a notch formed in reinforcement member 825, and thereby, fixation portion 559a is fixed to reinforcement member 825. Fixation portion 559a may be fastened to reinforcement member 825.

Fixation portion 559b passes through the hole 33b (see Fig. 8) formed in cooling plate 330, and is fixed to reinforcement member 825. The method for fixing fixation portion 559b to reinforcement member 825 may be the same as the method for fixing fixation portion 559a to reinforcement member 825, or may be different from the method for fixing fixation portion 559a to reinforcement member 825.

With the resin member 55 disposed between power storage module 13 and power storage module 18, even when the temperature of one of power storage module 13 and power storage module 18 becomes high, transfer of heat to the other can be suppressed. In other words, with the resin member 55 thus disposed, diffusion of heat to an adjacent power storage module can be suppressed.

Cooling pipe 420 passes between power storage module 13 and power storage module 18. Between power storage module 13 and power storage module 18, cooling pipe 420 is covered with resin member 55. More specifically, cooling pipe 420 is sandwiched between upper resin member 551 and lower resin member 552. Alternatively, cooling pipe 420 may be covered with resin member 55 by insert molding.

With the cooling pipe 420 covered with resin member 55, adhesion of condensation water to the surface of cooling pipe 420 between power storage module 13 and power storage module 18 can be suppressed. As a result, short-circuiting between power storage module 13 and power storage module 18 can be suppressed.

In addition, with the cooling pipe 420 covered with resin member 55, cooling pipe 420 can be protected from impact and heat.

Resin main body 550 is disposed above the cooling plate 330. As illustrated in Fig. 13, power storage device 100 (see Fig. 1) further comprises a filling material 593 disposed between cooling plate 330 and resin main body 550. As the filling material 593, the same material as filling material 591 may be used, or a different material may be used.

With the filling material 593 disposed between cooling plate 330 and resin main body 550, cooling plate 330 and resin main body 550 come into sufficient contact with each other. As a result, adhesion of condensation water to the surface of cooling plate 330 can be suppressed.

Upper resin member 551 has case support portions 557, 558. Each of case support portions 557, 558 protrudes upward and supports upper case 91. Case support portion 557 has wiring support portions 555a, 556a. Case support portion 558 has wiring support portions 555b, 556b.

Wiring support portion 555a is the inner surface of a notch that is formed in case support portion 557 in such a manner to open in a direction opposite to the first direction. Wiring support portion 555b is the inner surface of a notch that is formed in case support portion 558 in such a manner to open in a direction opposite to the first direction.

Wiring support portion 556a is the inner surface of a notch that is formed in case support portion 557 in such a manner to open in the first direction. Wiring support portion 556b is the inner surface of a notch that is formed in case support portion 558 in such a manner to open in the first direction.

Wire harnesses 711, 712 pass between power storage module 13 and power storage module 18. In other words, wire harnesses 711, 712 are disposed between power storage module 13 and power storage module 18. Wire harnesses 711, 712 are supported by resin member 55. More specifically, wire harness 711 is supported by wiring support portions 556a, 556b. Wire harness 712 is supported by wiring support portions 555a, 555b.

An upper end 55a of resin member 55 is positioned above an upper end 13a of power storage module 13 and also above an upper end 18a of power storage module 18. As a result, power storage modules 13, 18 can be protected from impact applied from above the upper case 91.

Between power storage module 18 and power storage module 17, resin member 56 is disposed. Resin member 56 includes a resin main body 560, a fixation portion 569a, and a fixation portion 569b. Resin member 56 includes upper resin member 561, and lower resin member 562 disposed below the upper resin member 561. Lower resin member 562 has fixation portion 569a and fixation portion 569b. Resin main body 560 includes upper resin member 561, as well as a portion of lower resin member 562 excluding the fixation portions 569a, 569b. Fixation portions 569a, 569b protrude downward from resin main body 560.

Fixation portion 569a passes through the hole 33c formed in cooling plate 330, and is fixed to reinforcement member 826. In an example, fixation portion 569a has a protruded portion 569c. Protruded portion 569c engages in a notch formed in reinforcement member 826, and thereby, fixation portion 569a is fixed to reinforcement member 826. Fixation portion 569a may be fastened to reinforcement member 826.

Fixation portion 569b passes through the hole 33d (see Fig. 8) formed in cooling plate 330, and is fixed to reinforcement member 826. The method for fixing fixation portion 569b to reinforcement member 826 may be the same as the method for fixing fixation portion 569a to reinforcement member 826, or may be different from the method for fixing fixation portion 569a to reinforcement member 826.

With the resin member 56 disposed between power storage module 17 and power storage module 18, even when the temperature of one of power storage module 17 and power storage module 18 becomes high, transfer of heat to the other can be suppressed. In other words, with the resin member 56 thus disposed, diffusion of heat to an adjacent power storage module can be suppressed.

Resin main body 560 is disposed above the cooling plate 330. As illustrated in Fig. 13, power storage device 100 (see Fig. 1) further comprises a filling material 594 disposed between cooling plate 330 and resin main body 560. As the filling material 594, the same material as filling material 591 may be used, or a different material may be used.

With the filling material 594 disposed between cooling plate 330 and resin main body 560, cooling plate 330 and resin main body 560 come into sufficient contact with each other. As a result, adhesion of condensation water to the surface of cooling plate 330 can be suppressed.

Upper resin member 561 has case support portions 567, 568. Each of case support portions 567, 568 protrudes upward and supports upper case 91. Case support portion 567 has wiring support portions 565a, 566a. Case support portion 568 has wiring support portions 565b, 566b.

Wiring support portion 565a is the inner surface of a notch that is formed in case support portion 567 in such a manner to open in a direction opposite to the first direction. Wiring support portion 565b is the inner surface of a notch that is formed in case support portion 568 in such a manner to open in a direction opposite to the first direction.

Wiring support portion 566a is the inner surface of a notch that is formed in case support portion 567 in such a manner to open in the first direction. Wiring support portion 566b is the inner surface of a notch that is formed in case support portion 568 in such a manner to open in the first direction.

Wire harnesses 721, 722 pass between power storage module 18 and power storage module 17. In other words, wire harnesses 721, 722 are disposed between power storage module 18 and power storage module 17. Wire harnesses 721, 722 are supported by resin member 56. More specifically, wire harness 721 is supported by wiring support portions 565a, 565b. Wire harness 722 is supported by wiring support portions 566a, 566b.

An upper end 56a of resin member 56 is positioned above the upper end 18a of power storage module 18 and also above an upper end 17a of power storage module 17. As a result, power storage modules 17, 18 can be protected from impact applied from above the upper case 91.

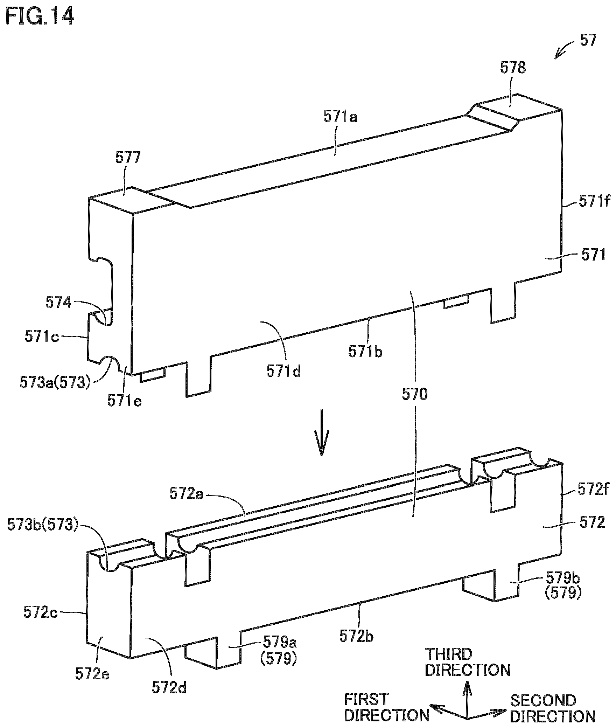

Referring to Fig. 14 to Fig. 16, resin members 51, 52 illustrated in Fig. 2 and Fig. 4 will be described in detail.

Fig. 14 is a perspective view of a resin member adopted as each of resin members 51, 52 illustrated in Fig. 2 and Fig. 4. Referring to Fig. 14, a resin member 57 is made of a fire-resistant, heat-insulating resin. Resin member 57 is adopted as each of resin members 51, 52 illustrated in Fig. 2 and Fig. 4. Resin member 57 includes a resin main body 570 and a fixation portion 579.

Resin main body 570 is disposed above the cooling plates 310, 320, 330 (see Fig. 8). Resin member 57 includes an upper resin member 571, and a lower resin member 572 disposed below the upper resin member 571. Lower resin member 572 has fixation portion 579. Resin main body 570 includes upper resin member 571, as well as a portion of lower resin member 572 excluding the fixation portion 579.

Upper resin member 571 is adopted as each of upper resin members 511, 521 illustrated in Fig. 2. Lower resin member 572 is adopted as each of lower resin members 512, 522 illustrated in Fig. 2. Upper resin member 571 and lower resin member 572 are fixed to each other by a snap-fit structure.

Fixation portion 579 includes a fixation portion 579a and a fixation portion 579b. Fixation portion 579 protrudes downward from resin main body 570. Fixation portion 579 is fixed to the reinforcement member among reinforcement members 821, 822 (see Fig. 3) that is positioned below the fixation portion 579.

Upper resin member 571 has an upper surface 571a and a lower surface 571b which are spaced apart from each other in the third direction. Upper resin member 571 has side surfaces 571c, 571d which are spaced apart from each other in the first direction. Each of side surface 571c and side surface 571d is formed to extend in the second direction. Upper resin member 571 has side surfaces 571e, 571f which are spaced apart from each other in the second direction.

Lower resin member 572 has an upper surface 572a and a lower surface 572b which are spaced apart from each other in the third direction. Upper surface 572a faces lower surface 571b of upper resin member 571. Lower resin member 572 has side surfaces 572c, 572d which are spaced apart from each other in the first direction. Each of side surface 572c and side surface 572d is formed to extend in the second direction. Lower resin member 572 has side surfaces 572e, 572f which are spaced apart from each other in the second direction.

The length of upper resin member 571 in the second direction is the same as the length of lower resin member 572 in the second direction. Preferably, the length of upper resin member 571 in the second direction is the same as the length of each power storage module in the second direction.

In resin member 57, a hollow 573 is formed through which cooling pipe 410 or cooling pipe 420 illustrated in Fig. 8 can pass. More specifically, in lower surface 571b of upper resin member 571, a notch 573a is formed. In upper surface 572a of lower resin member 572, a notch 573b is formed. By a combination of notch 573a and notch 573b, hollow 573 is formed in resin member 57 through which cooling pipe 410 or cooling pipe 420 can pass. For making cooling pipe 410 (or cooling pipe 420) pass through the hollow 573, it is possible to firstly place cooling pipe 410 (or cooling pipe 420) in notch 573b of lower resin member 572 and then fix upper resin member 571 to lower resin member 572. As a result, cooling pipe 410 (or cooling pipe 420) is sandwiched between upper resin member 571 and lower resin member 572. In other words, cooling pipe 410 (or cooling pipe 420) is covered with resin member 57.

In upper resin member 571, a notch 574 is formed in which bus bar 251 illustrated in Fig. 6 can engage. More specifically, in side surface 571c, notch 574 is formed in which bus bar 251 can engage. With the bus bar 251 engaged in notch 574, bus bar 251 is partially covered with resin member 57.

Upper resin member 571 has case support portions 577, 578 that protrude upward and support upper case 91 (see Fig. 2). More specifically, case support portions 577, 578 are provided on upper surface 571a of upper resin member 571 in such a manner to protrude upward from upper surface 571a.

With the case support portions 577, 578 provided to resin member 57, power storage unit 110 (see Fig. 2) can be protected from impact applied from above the upper case 91 (see Fig. 2).

In the present embodiment, the number of case support portions provided on upper surface 571a of upper resin member 571 is two; however, the number of case support portions is not limited to this configuration. The number of case support portions may be one, or may be three or more. With a plurality of case support portions provided on upper surface 571a, resistance against impact applied from above the upper case 91 (see Fig. 2) is enhanced.

Moreover, with the case support portions 577, 578 provided to protrude upward from upper surface 571a of upper resin member 571, a gap can be formed between upper surface 571a of resin member 57 and upper case 91 (see Fig. 2). As a result, even when hot gas is discharged from one of the power storage cells of the power storage module, build-up of debris in the vicinity of the power storage module can be suppressed. Hence, a rise of the pitch of smoke production during a chain of smoke production events of power storage cells can be suppressed.

As each of resin members 51, 52 illustrated in Fig. 2 and Fig. 4, resin member 58 (see Fig. 9) may be adopted.

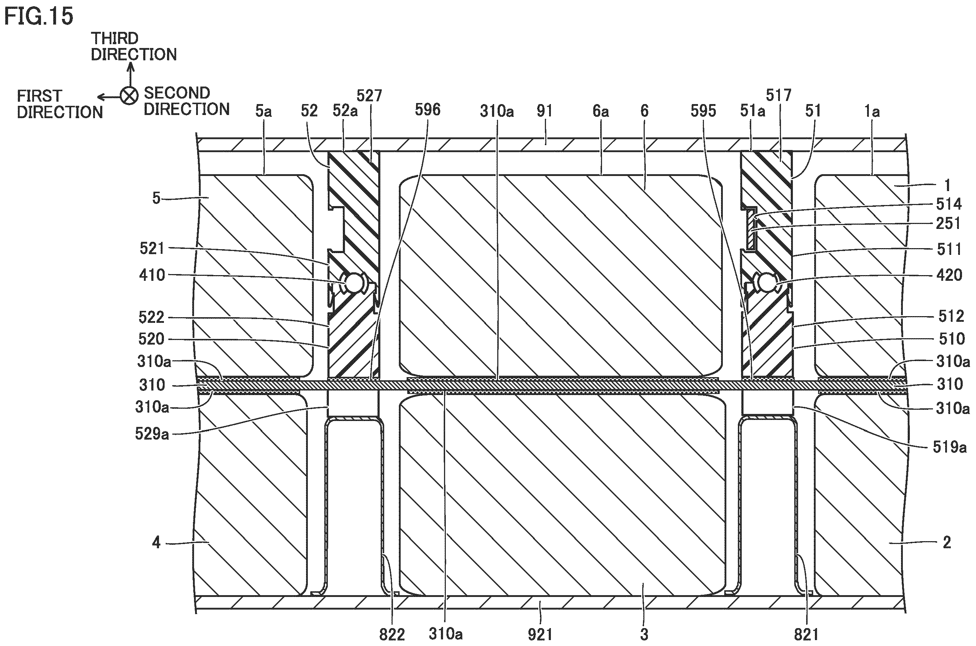

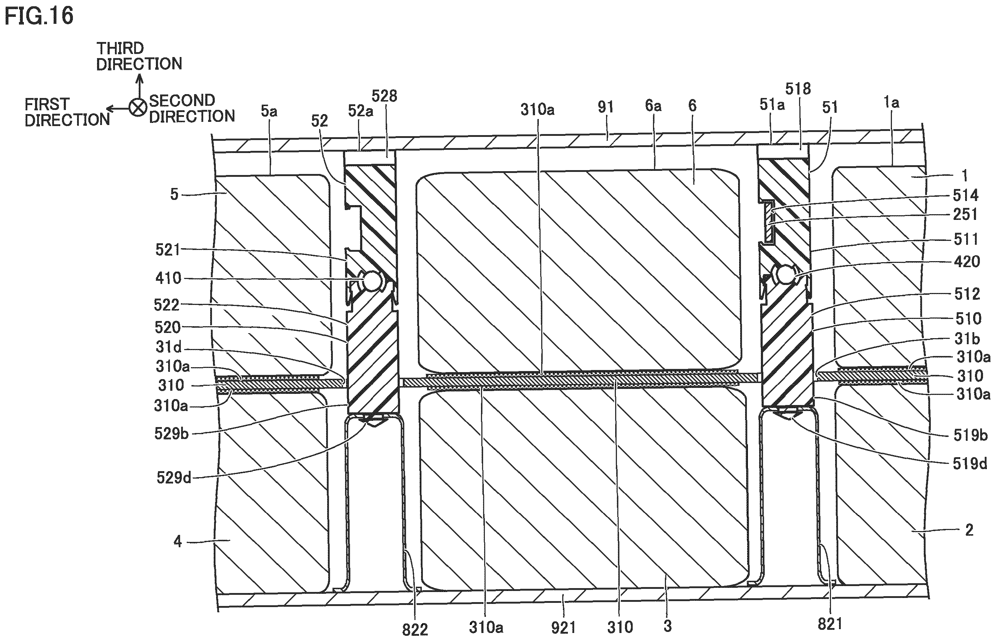

Fig. 15 is a cross-sectional view at the line XV-XV drawn in Fig. 4. Fig. 16 is a cross-sectional view at the line XVI-XVI drawn in Fig. 4. Referring to Fig. 15 and Fig. 16, power storage module 1, power storage module 6, and power storage module 5 are disposed in this order along the first direction. Power storage module 6 is spaced apart from power storage module 1 in the first direction. Power storage module 5 is spaced apart from power storage module 6 in the first direction.

Power storage module 2 is disposed below the power storage module 1. Power storage module 3 is disposed below the power storage module 6. Power storage module 4 is disposed below the power storage module 5. Between power storage module 2 and power storage module 3, reinforcement member 821 is disposed. Between power storage module 3 and power storage module 4, reinforcement member 822 is disposed.

Cooling plate 310 is disposed below the power storage module 1, the power storage module 6, and the power storage module 5. Below the cooling plate 310, power storage modules 2 to 4 are disposed. Cooling plate 310 is disposed between power storage module 1 and power storage module 2, and also between power storage module 6 and power storage module 3, and also between power storage module 5 and power storage module 4. Cooling plate 310 is disposed above the reinforcement members 821, 822.

Between cooling plate 310 and power storage module 1, and also between cooling plate 310 and power storage module 6, and also between cooling plate 310 and power storage module 5, and also between cooling plate 310 and power storage module 2, and also between cooling plate 310 and power storage module 3, and also between cooling plate 310 and power storage module 4, a thermally conductive material 310a is disposed. As the thermally conductive material 310a, the same material as thermally conductive material 320a may be used, or a different material may be used. With the thermally conductive material 310a provided between power storage modules 1 to 6 and cooling plate 310, thermal conduction between power storage modules 1 to 6 and cooling plate 310 is enhanced.

Between power storage module 1 and power storage module 6, resin member 51 is disposed. Resin member 51 includes a resin main body 510, a fixation portion 519a, and a fixation portion 519b. Resin member 51 includes upper resin member 511, and lower resin member 512 disposed below the upper resin member 511. Lower resin member 512 has fixation portion 519a and fixation portion 519b. Resin main body 510 includes upper resin member 511, as well as a portion of lower resin member 512 excluding the fixation portions 519a, 519b. Fixation portions 519a, 519b protrude downward from resin main body 510.

Fixation portion 519b passes through the hole 31b formed in cooling plate 310, and is fixed to reinforcement member 821. In an example, fixation portion 519b has a protruded portion 519d. Protruded portion 519d engages in a notch formed in reinforcement member 821, and thereby, fixation portion 519b is fixed to reinforcement member 821. Fixation portion 519b may be fastened to reinforcement member 821.

Fixation portion 519a passes through the hole 31a (see Fig. 8) formed in cooling plate 310, and is fixed to reinforcement member 821. The method for fixing fixation portion 519a to reinforcement member 821 may be the same as the method for fixing fixation portion 519b to reinforcement member 821, or may be different from the method for fixing fixation portion 519b to reinforcement member 821.

With the resin member 51 disposed between power storage module 1 and power storage module 6, even when the temperature of one of power storage module 1 and power storage module 6 becomes high, transfer of heat to the other can be suppressed. In other words, with the resin member 51 thus disposed, diffusion of heat to an adjacent power storage module can be suppressed.

Cooling pipe 420 passes between power storage module 1 and power storage module 6. Between power storage module 1 and power storage module 6, cooling pipe 420 is covered with resin member 51. More specifically, cooling pipe 420 is sandwiched between upper resin member 511 and lower resin member 512. Alternatively, cooling pipe 420 may be covered with resin member 51 by insert molding.

With the cooling pipe 420 covered with resin member 51, adhesion of condensation water to the surface of cooling pipe 420 between power storage module 1 and power storage module 6 can be suppressed. As a result, short-circuiting between power storage module 1 and power storage module 6 can be suppressed.

In addition, with the cooling pipe 420 covered with resin member 51, cooling pipe 420 can be protected from impact and heat.

Resin main body 510 is disposed above the cooling plate 310. As illustrated in Fig. 15, power storage device 100 (see Fig. 1) further comprises a filling material 595 disposed between cooling plate 310 and resin main body 510. As the filling material 595, the same material as filling material 591 may be used, or a different material may be used.

With the filling material 595 disposed between cooling plate 310 and resin main body 510, cooling plate 310 and resin main body 510 come into sufficient contact with each other. As a result, adhesion of condensation water to the surface of cooling plate 310 can be suppressed.

Bus bar 251 is connected to power storage module 6. Bus bar 251 passes between power storage module 1 and power storage module 6. Between power storage module 1 and power storage module 6, bus bar 251 is covered with resin member 51. More specifically, bus bar 251 is engaged in a notch 514 formed in upper resin member 511. In other words, between power storage module 1 and power storage module 6, bus bar 251 is partially covered with upper resin member 511.

With the bus bar 251 covered with resin member 51, an event of electrically-conductive foreign matter (debris) from the power storage module coming into contact with bus bar 251 can be suppressed. As a result, short-circuiting caused by debris can be suppressed.

In addition, with the bus bar 251 covered with resin member 51, bus bar 251 can be protected from impact and heat.

Bus bar 251 is thus covered with resin member 51, and in the vicinity of bus bar 251, cooling pipe 420 is disposed. As a result, degradation of heat dissipation performance of bus bar 251 can be suppressed.

Resin main body 510 is composed of upper resin member 511 and lower resin member 512, and cooling pipe 420 is sandwiched between upper resin member 511 and lower resin member 512, and bus bar 251 is covered with upper resin member 511. As a result, cooling pipe 420 and bus bar 251 can be covered with resin member 51, without being affected by positional variations of bus bar 251 in the height direction.

Upper resin member 511 has case support portions 517, 518. Each of case support portions 517, 518 protrudes upward and supports upper case 91.

An upper end 51a of resin member 51 is positioned above an upper end 1a of power storage module 1 and also above an upper end 6a of power storage module 6. As a result, power storage modules 1, 6 can be protected from impact applied from above the upper case 91.

Between power storage module 6 and power storage module 5, resin member 52 is disposed. Resin member 52 includes a resin main body 520, a fixation portion 529a, and a fixation portion 529b. Resin member 52 includes upper resin member 521, and lower resin member 522 disposed below the upper resin member 521. Lower resin member 522 has fixation portion 529a and fixation portion 529b. Resin main body 520 includes upper resin member 521, as well as a portion of lower resin member 522 excluding the fixation portions 529a, 529b. Fixation portions 529a, 529b protrude downward from resin main body 520.

Fixation portion 529b passes through the hole 31d formed in cooling plate 310, and is fixed to reinforcement member 822. In an example, fixation portion 529b has a protruded portion 529d. Protruded portion 529d engages in a notch formed in reinforcement member 822, and thereby, fixation portion 529b is fixed to reinforcement member 822. Fixation portion 529b may be fastened to reinforcement member 822.

Fixation portion 529a passes through the hole 31c (see Fig. 8) formed in cooling plate 310, and is fixed to reinforcement member 822. The method for fixing fixation portion 529a to reinforcement member 822 may be the same as the method for fixing fixation portion 529b to reinforcement member 822, or may be different from the method for fixing fixation portion 529b to reinforcement member 822.

With the resin member 52 disposed between power storage module 5 and power storage module 6, even when the temperature of one of power storage module 5 and power storage module 6 becomes high, transfer of heat to the other can be suppressed. In other words, with the resin member 52 thus disposed, diffusion of heat to an adjacent power storage module can be suppressed.

Cooling pipe 410 passes between power storage module 5 and power storage module 6. Between power storage module 5 and power storage module 6, cooling pipe 410 is covered with resin member 52. More specifically, cooling pipe 410 is sandwiched between upper resin member 521 and lower resin member 522. Alternatively, cooling pipe 410 may be covered with resin member 52 by insert molding.

With the cooling pipe 410 covered with resin member 52, adhesion of condensation water to the surface of cooling pipe 410 between power storage module 5 and power storage module 6 can be suppressed. As a result, short-circuiting between power storage module 5 and power storage module 6 can be suppressed.

In addition, with the cooling pipe 410 covered with resin member 52, cooling pipe 410 can be protected from impact and heat.

Resin main body 520 is disposed above the cooling plate 310. As illustrated in Fig. 15, power storage device 100 (see Fig. 1) further comprises a filling material 596 disposed between cooling plate 310 and resin main body 520. As the filling material 596, the same material as filling material 591 may be used, or a different material may be used.

With the filling material 596 disposed between cooling plate 310 and resin main body 520, cooling plate 310 and resin main body 520 come into sufficient contact with each other. As a result, adhesion of condensation water to the surface of cooling plate 310 can be suppressed.

Upper resin member 521 has case support portions 527, 528. Each of case support portions 527, 528 protrudes upward and supports upper case 91.

An upper end 52a of resin member 52 is positioned above the upper end 6a of power storage module 6 and also above an upper end 5a of power storage module 5. As a result, power storage modules 5, 6 can be protected from impact applied from above the upper case 91.

As described above, in the present embodiment, between two power storage modules spaced apart from each other in the first direction, a cooling pipe is covered with a resin member. As a result, between these two power storage modules, adhesion of condensation water to the surface of the cooling pipe can be suppressed. Hence, short-circuiting caused by condensation water can be suppressed.

### [Variation 1]

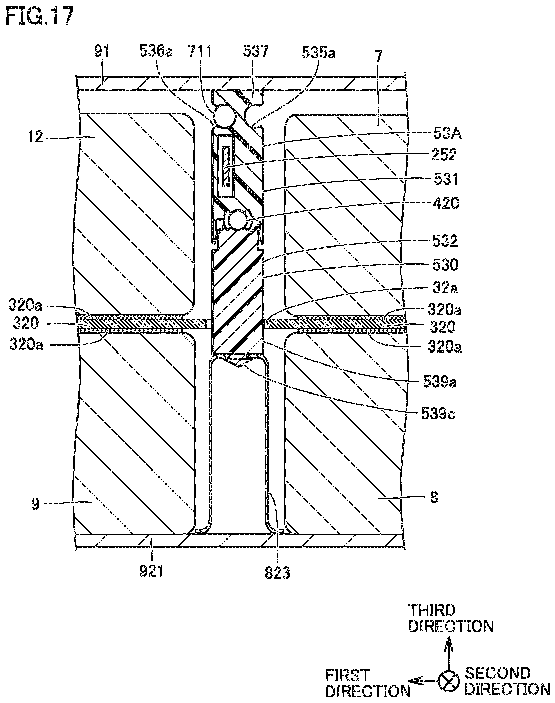

Fig. 17 is a view of a resin member according to Variation 1. Fig. 17 shows a cross-sectional view at the line X-X (see Fig. 4), where a resin member 53A instead of resin member 53 is disposed between power storage module 7 and power storage module 12.

As illustrated in Fig. 10, in the above-mentioned embodiment, between power storage module 7 and power storage module 12, bus bar 252 is partially exposed. Alternatively, as illustrated in Fig. 17, between power storage module 7 and power storage module 12, bus bar 252 may be completely covered with upper resin member 531. By insert molding, it is possible to completely cover bus bar 252 with resin member 53A.

Moreover, as illustrated in Fig. 15, in the above-mentioned embodiment, between power storage module 1 and power storage module 6, bus bar 251 is partially exposed. Alternatively, between power storage module 1 and power storage module 6, bus bar 251 may be completely covered with upper resin member 511. By insert molding, it is possible to completely cover bus bar 251 with resin member 51.

### [Variation 2]

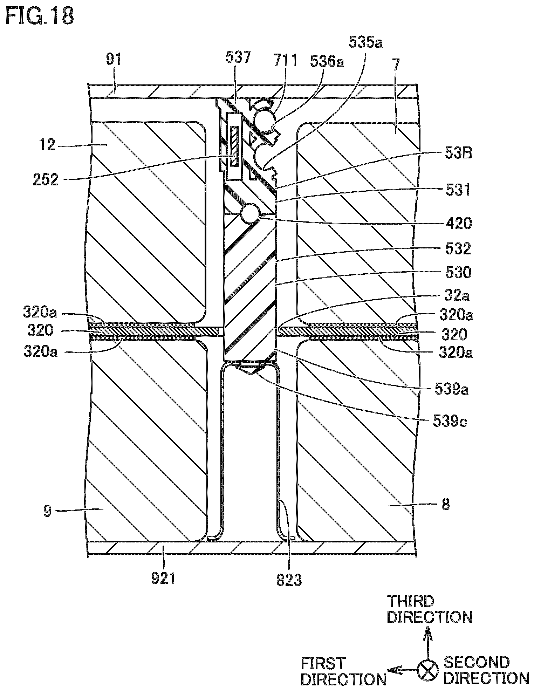

Fig. 18 is a view of a resin member according to Variation 2. Fig. 18 shows a cross-sectional view at the line X-X (see Fig. 4), where a resin member 53B instead of resin member 53 is disposed between power storage module 7 and power storage module 12.

As illustrated in Fig. 10, in the above-mentioned embodiment, between power storage module 7 and power storage module 12, wire harness 711 is disposed above the bus bar 252. Alternatively, as illustrated in Fig. 18, between power storage module 7 and power storage module 12, bus bar 252 and wire harness 711 may be disposed side by side in the first direction. With the bus bar 252 and the wire harness 711 disposed side by side in the first direction, cooling pipe 420 can be disposed higher than in the above-mentioned embodiment.

Cooling pipe 420 is disposed in a narrow space between power storage modules. After power storage modules 1 to 18 are mounted, cooling pipe 420 is passed between the power storage modules. Passing the cooling pipe 420 is a work to be done with limited viewability and accessibility. Therefore, when cooling pipe 420 is disposed high, assemblability is enhanced from the standpoint of viewability and accessibility.

Instead of resin members 51, 52, 54 to 56, resin member 53B may be adopted.

### [Variation 3]

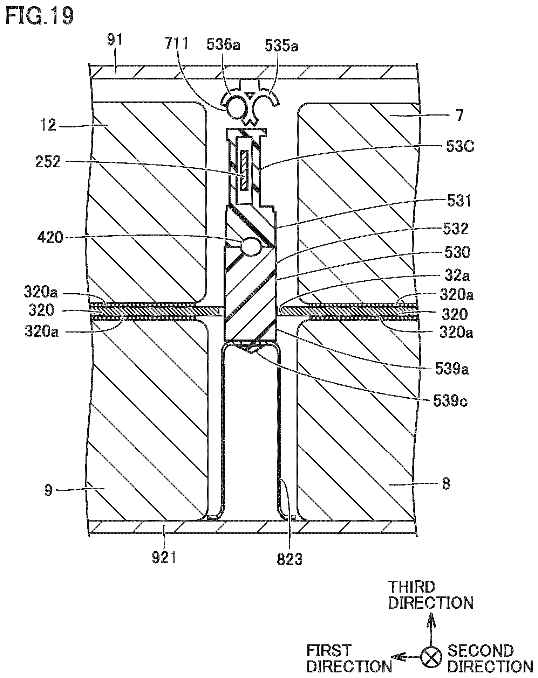

Fig. 19 is a view of a resin member according to Variation 3. Fig. 19 shows a cross-sectional view at the line X-X (see Fig. 4), where a resin member 53C instead of resin member 53 is disposed between power storage module 7 and power storage module 12.

As illustrated in Fig. 10 and Fig. 11, in the above-mentioned embodiment, wiring support portions 535a, 536a, 535b, 536b are provided to resin member 53. Alternatively, as illustrated in Fig. 19, wiring support portions 535a, 536a may be provided to upper case 91, not to resin member 53C. Similarly, wiring support portions 535b, 536b may be provided to upper case 91 as well.

Instead of resin members 51, 52, 54 to 56, resin member 53C may be adopted.

### [Variation 4]

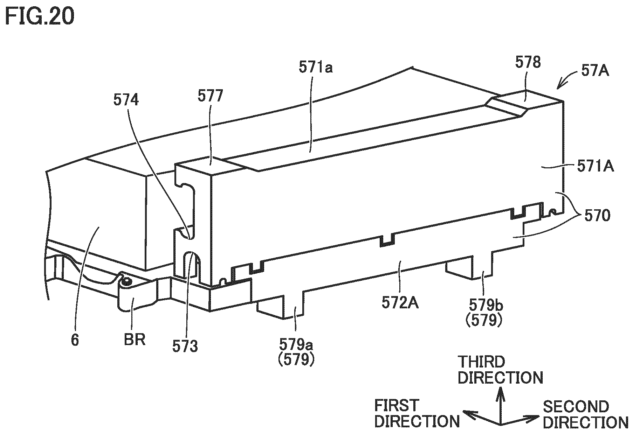

Fig. 20 is a view of a resin member according to Variation 4. A resin member 57A is a variation of resin member 57 illustrated in Fig. 14. Resin member 57A includes an upper resin member 571A instead of upper resin member 571 (see Fig. 14). Moreover, resin member 57A includes a lower resin member 572A instead of lower resin member 572 (see Fig. 14).

As illustrated in Fig. 14, in the above-mentioned embodiment, the length of upper resin member 571 in the second direction is the same as the length of lower resin member 572 in the second direction. Alternatively, as illustrated in Fig. 20, the length of lower resin member 572A in the second direction may be shorter than the length of upper resin member 571A in the second direction. With the length of lower resin member 572A in the second direction being shorter than the length of upper resin member 571A in the second direction, a bracket BR can be disposed at a position below the upper resin member 571A where lower resin member 572A is not present. Bracket BR connects the power storage modules disposed above the cooling plate (for example, power storage modules 1, 5, 6 illustrated in Fig. 6), to the power storage modules disposed below the cooling plate (for example, power storage modules 2 to 4 illustrated in Fig. 6).

The same applies to resin member 58 illustrated in Fig. 9; the length of lower resin member 582 in the second direction may be shorter than the length of upper resin member 581 in the second direction. In this case, bracket BR can be disposed at a position below the upper resin member 581 where lower resin member 582 is not present.

### [Variation 5]

In the above-mentioned embodiment, the power storage modules are stacked in two tiers; alternatively, the power storage modules may form only one tier.

### [Variation 6]

In the above-mentioned embodiment, cooling pipe 410 or cooling pipe 420 passing between two power storage modules spaced apart from each other in the first direction is completely covered with the resin member between these two power storage modules. Alternatively, between two power storage modules spaced apart from each other in the first direction, cooling pipe 410 may be partially covered with the resin member. Between two power storage modules spaced apart from each other in the first direction, cooling pipe 420 may be partially covered with the resin member.

### [Variation 7]

In the above-mentioned embodiment, as illustrated in Fig. 9, resin member 58 is composed of two separate components, upper resin member 581 and lower resin member 582. Alternatively, resin member 58 may not be composed of two separate components, upper resin member 581 and lower resin member 582. In other words, upper resin member 581 and lower resin member 582 may form a single-piece component, resin member 58.

Similarly, in the above-mentioned embodiment, as illustrated in Fig. 14, resin member 57 is composed of two separate components, upper resin member 571 and lower resin member 572. Alternatively, resin member 57 may not be composed of two separate components, upper resin member 571 and lower resin member 572. In other words, upper resin member 571 and lower resin member 572 may form a single-piece component, resin member 57.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

## Claims

1. A power storage device comprising:
a first power storage module (7);
a second power storage module (12) spaced apart from the first power storage module (7);
a cooling pipe (420) passing between the first power storage module (7) and the second power storage module (12); and
a resin member (53) that is disposed between the first power storage module (7) and the second power storage module (12) and that covers the cooling pipe (420) between the first power storage module (7) and the second power storage module (12).

2. The power storage device according to claim **1,** wherein an upper end of the resin member (53) is positioned above an upper end of the first power storage module (7) and also above an upper end of the second power storage module (12).

3. The power storage device according to claim 1, wherein
the power storage device (100) further comprises an accommodation case (90) that accommodates the first power storage module (7) and the second power storage module (12),
the accommodation case (90) includes an upper case (91) and a lower case (92), and
the resin member (53) has a case support portion (537) that protrudes upward and that supports the upper case (91).

4. The power storage device according to claim 1, wherein
the power storage device (100) further comprises an accommodation case (90) that accommodates the first power storage module (7) and the second power storage module (12),
the accommodation case (90) includes an upper case (91) and a lower case (92),
the power storage device (100) further comprises:
a cooling plate (320) connected to the cooling pipe (420) and disposed below the first power storage module (7) and also below the second power storage module (12);
a third power storage module (8) disposed below the first power storage module (7);
a fourth power storage module (9) disposed below the second power storage module (12); and
a reinforcement member (823) provided to the lower case (92) and formed to protrude upward from the lower case (92),
the reinforcement member (823) is disposed between the third power storage module (8) and the fourth power storage module (9),
the cooling plate (320) is disposed between the first power storage module (7) and the third power storage module (8) and also between the second power storage module (12) and the fourth power storage module (9),
the cooling plate (320) is disposed above the reinforcement member (823), and
the resin member (53) includes a resin main body (530) disposed above the cooling plate (320), as well as a fixation portion (539a) protruding downward from the resin main body (530) and fixed to the reinforcement member (823).

5. The power storage device according to claim 4, wherein the power storage device (100) further comprises a filling material (591) disposed between the cooling plate (320) and the resin main body (530).

6. The power storage device according to claim 1, wherein
the resin member (53) includes:
an upper resin member (531); and
a lower resin member (532) disposed below the upper resin member (531), and
the cooling pipe (420) is sandwiched between the upper resin member (531) and the lower resin member (532).

7. The power storage device according to claim 6, wherein
the power storage device (100) further comprises an accommodation case (90) that accommodates the first power storage module (7) and the second power storage module (12),
the accommodation case (90) includes an upper case (91) and a lower case (92), and
the upper resin member (531) has a case support portion (537) that protrudes upward and that supports the upper case (91).

8. The power storage device according to claim 7, wherein
the power storage device (100) further comprises:
an electrical apparatus (61) disposed inside the accommodation case (90); and
a wire harness (711) connected to the electrical apparatus (61) and disposed between the first power storage module (7) and the second power storage module (12), and
the case support portion (537) has a wiring support portion (536a) that supports the wire harness (711).

9. The power storage device according to claim 6, wherein
the power storage device (100) further comprises an accommodation case (90) that accommodates the first power storage module (7) and the second power storage module (12),
the accommodation case (90) includes an upper case (91) and a lower case (92),
the power storage device (100) further comprises:
a cooling plate (320) connected to the cooling pipe (420) and disposed below the first power storage module (7) and also below the second power storage module (12);
a third power storage module (8) disposed below the first power storage module (7);
a fourth power storage module (9) disposed below the second power storage module (12); and
a reinforcement member (823) provided to the lower case (92) and formed to protrude upward from the lower case (92),
the reinforcement member (823) is disposed between the third power storage module (8) and the fourth power storage module (9),
the cooling plate (320) is disposed between the first power storage module (7) and the third power storage module (8) and also between the second power storage module (12) and the fourth power storage module (9),
the cooling plate (320) is disposed above the reinforcement member (823), and
the lower resin member (532) has a fixation portion (539a) protruding downward and fixed to the reinforcement member (823).
